# EUROPEAN PATENT SPECIFICATION

(11) **EP 2 410 394 B1**
(45) Date of publication and mention of the grant of the patent: **05.09.2018**
(21) Application number: 10753311.9
(22) Date of filing: 19.03.2010
(51) Int. Cl.: G05B 19/418, B23K 31/00, G06Q 50/00, B23K 9/095

(54) **WELDING OPERATION MANAGEMENT DEVICE AND WELDING OPERATION MANAGEMENT METHOD**
VORRICHTUNG FÜR SCHWEISSARBEITSSVERWALTUNG UND VERFAHREN FÜR SCHWEISSARBEITSVERWALTUNG
DISPOSITIF DE GESTION D'UNE OPÉRATION DE SOUDAGE ET PROCÉDÉ DE GESTION D'UNE OPÉRATION DE SOUDAGE

(30) Priority: 19.03.2009 JP 2009068275
(43) Date of publication of application: 25.01.2012
(73) Proprietor: Toshiba Plant Systems & Services Corporation, Tsurumi-Ku, Yokohama-Shi Kanagawa 2300051 (JP)
(72) Inventor: KATOH,Yuji, Kanagawa 2300051 (JP); NAKAMURA, Tsutsumi, Kanagawa 2300051 (JP); OGATA, Kohji, Kanagawa 2300051 (JP); FURIHATA, Masaaki, Kanagawa 2300051 (JP); TAKAI, Toshiharu, Kanagawa 2300051 (JP)
(74) Representative: Kramer Barske Schmidtchen Patentanwälte PartG mbB
(86) International application number: PCT/JP2010/001991
(87) International publication number: WO 2010/106816

(56) References cited:
- WO-A2-2009/009204
- JP-A- 10 111 884
- JP-A- 2002 230 059
- JP-A- 2005 174 343
- JP-A- 2006 247 666
- JP-A- 2007 167 915
- JP-A- 2007 280 306
- JP-A- 2007 310 614
- JP-A- 2008 059 116

## Description

The present invention relates to a welding operation management device that supports a pipe welding operation and a welding management operation in plant construction work, a welding operation management system, a welding operation management method, and a welding operation terminal.

### BACKGROUND ART

In piping work of plant construction work, welding inspection based on laws or the like or welding management conforming thereto is frequently required (see, for example, Japanese Patent Application Laid-Open Nos. 2007-193557 and 2008-59116). That is, welding shall be designed according to standards, a certified welder shall do welding according to a permitted method, and required welding inspection shall be passed.

In the welding design, information such as the material of pipe, pipe diameter, pipe thickness, and joint design from execution drawings, a welding execution method meeting the conditions is found for each weld joint, and whether the method fulfils design instruction conditions is checked.

### CITATION LIST

### PATENT LITERATURE

PLT 1: Japanese Patent Application Laid-Open No. 2007-193557
PLT 2: Japanese Patent Application Laid-Open No. 2008-59116

### SUMMARY OF THE INVENTION

### TECHNICAL PROBLEM

However, the number of weld joints of pipe in plant construction work extends to several tens of thousand and deciding the welding execution method for each weld joint requires enormous efforts and also leads to man-made errors.

Moreover, to guarantee quality of welding, it is absolutely necessary not only to decide the welding execution method, but also to select weld materials to be used and the welder possessing required welding qualifications. However, the number of combinations of the weld material and welding qualifications for one welding execution method is not necessarily one, which makes the identification difficult.

In view of the above problems of the conventional technology, an object of the present invention is to provide a welding operation management device, a welding operation management system, a welding operation management method, and a welding operation terminal that improve reliability and efficiency of a pipe welding operation and a welding management operation in plant construction work.

### SOLUTION TO PROBLEM

According to an aspect of the present invention, a welding operation management device as defined in claim 1 is provided.

According to still another aspect of the present invention, the welding operation management method defined in claim 7 is provided.

### ADVANTAGEOUS EFFECTS OF INVENTION

According to the present invention, a welding operation management device, a welding operation management system, a welding operation management method, and a welding operation terminal that improve reliability and efficiency of a pipe welding operation and a welding management operation in plant construction work will be provided.

### BRIEF DESCRIPTION OF THE DRAWINGS

FIG. 1 is a block diagram showing an overall configuration example of a welding operation management system according to an embodiment of the present invention.
FIG. 2 is a diagram showing a concrete example of a weld joint specification table shown in FIG. 1.
FIG. 3 is a diagram showing a concrete example of a thickness identification table of a welding portion shown in FIG. 1.
FIG. 4 is a diagram showing a concrete example of a welding execution method table shown in FIG. 1.
FIG. 5 is a diagram showing a concrete example of a material/base metal class conversion table shown in FIG. 1.
FIG. 6 is a diagram showing a concrete example of a welding execution method/joint design correspondence table shown in FIG. 1.
FIG. 7 is a diagram showing a concrete example of a weld material identification table shown in FIG. 1.
FIG. 8 is a diagram showing a concrete example of a welding qualification identification table shown in FIG. 1.
FIG. 9 is a diagram showing a concrete example of a possessed welding qualification table shown in FIG. 1.
FIG. 10 is a diagram showing a concrete example of a weld material delivery information table shown in FIG. 1.
FIG. 11 is a diagram showing a concrete example of a welding execution information table shown in FIG. 1.
FIG. 12 is a diagram showing a concrete example of welding operation instructions.
FIG. 13 is a diagram showing a concrete example of welding execution records.
FIG. 14 is a block diagram showing a configuration example of a welding operation terminal shown in FIG. 1.
FIG. 15 is a correlation diagram illustrating an operation of a welding operation management system according to an embodiment of the present invention.
FIG. 16 is a flow chart showing a concrete example of processing of a weld joint specification inspection unit shown in FIG. 1.
FIG. 17 is a flow chart showing a concrete example of processing of a weld material identification unit shown in FIG. 1.
FIG. 18 is a flow chart showing a concrete example of processing of a welding qualification identification unit shown in FIG. 1.
FIG. 19 is a diagram showing a concrete example of the weld joint.
FIG. 20 is an enlarged view of the weld joint shown in FIG. 19.
FIG. 21 is a sectional view in a cross section A-A' of a consumable insert shown in FIG. 20.
FIG. 22 is a correlation diagram of each program and a device for inspection and registration of weld joint specifications and identification of weld materials.
FIG. 23 is a correlation diagram of each program and the device for identification of weld joint specifications and welding operation instructions.
FIG. 24 is a correlation diagram of each program and the device for creation of a weld joint identification label.
FIG. 25 is a correlation diagram of each program and the device for registration of welding execution information.
FIG. 26 is a correlation diagram of each program of the welding operation terminal shown in FIG. 14.

### DESCRIPTION OF EMBODIMENTS

### <Explanation of terms>

First, terms of welding operation used in an embodiment of the present invention will be described.

- "Welding" is an operation to integrate two or more members by applying heat, pressure, or both so that the members to be joined have continuity therebetween. There are many welding methods and can roughly be divided into three categories: (1) fusion welding like shielded metal arc welding in which base metal is fused by heating for welding, (2) pressure welding like resistance welding in which pressure is applied for welding, and (3) brazing in which the base metal itself is not fused and instead, an alloy whose melting point is lower than that of the base metal is used as a filler metal for welding.

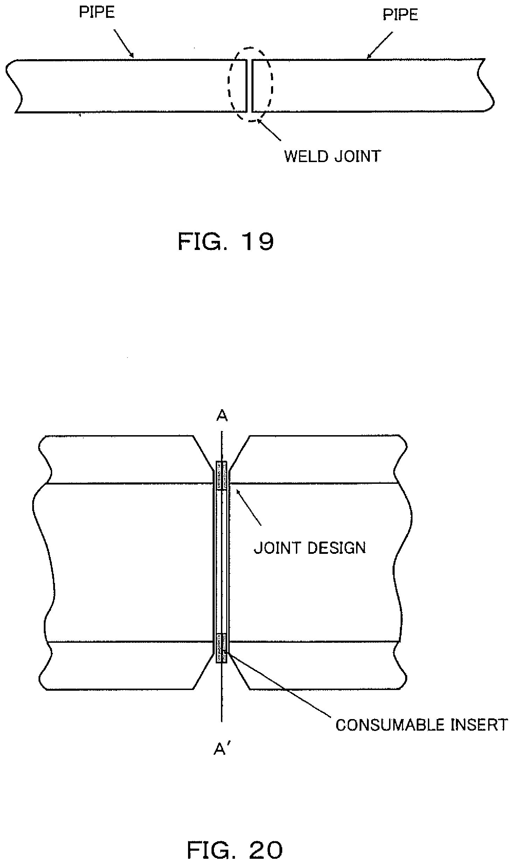

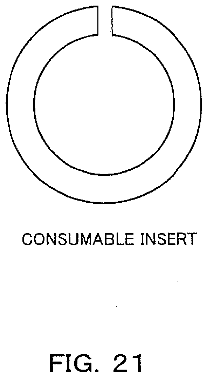

- "Weld joint" is a joint to be welded. FIG. 19 is a diagram showing a concrete example of the weld joint.
- "Base metal" is a metal (material) on the side to be welded.
- "Joint design" is the shape of a groove provided between joints to be welded and there are many types such as an I-type groove, V-type groove, and Y-type groove. The shape and dimensions of a groove is closely related to welding results. FIG. 20 is an enlarged view of the weld joint shown in FIG. 19.
- "Pipe diameter" is a nominal outside diameter (such as 100A and 50A) of a pipe.
- "Pipe thickness" is a nominal thickness (such as S40 and S80) of a pipe. "S" is an abbreviation for schedule.
- "Covered electrode" is a weld material (shielded metal arc welding covered electrode) used for shielded metal arc welding.
- "Filler metal" is a metal (weld material used for TIG welding) added during welding.
- "Consumable insert" is a metal material belonging to the same group as the base metal placed in a route portion in advance for butt welding and is often called an insert ring. FIG. 21 is a sectional view in a cross section A-A' of a consumable insert shown in FIG. 20.

### <Embodiment>

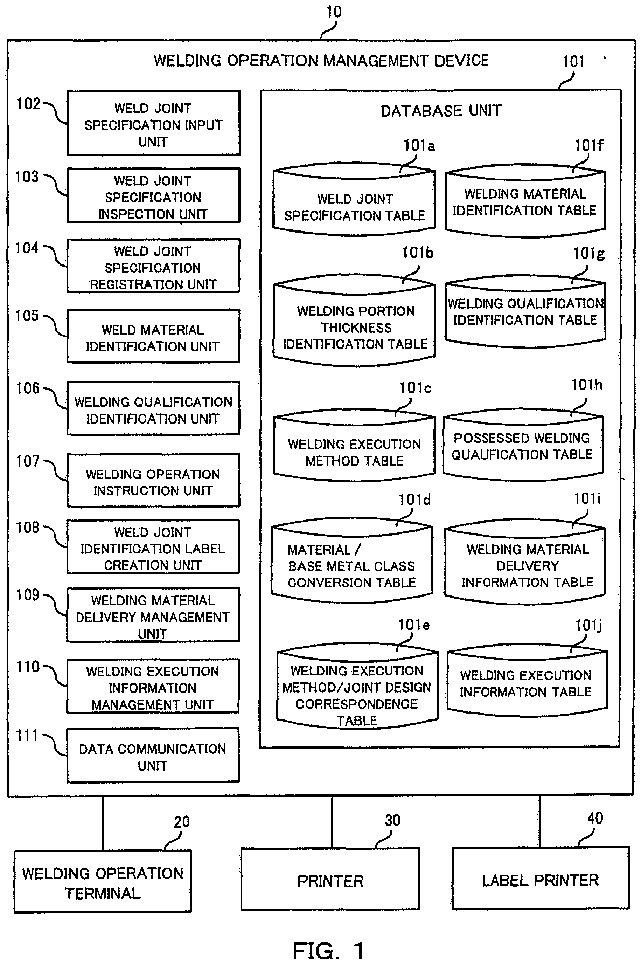

An embodiment of the present invention will be described below using drawings. FIG. 1 is a block diagram showing an overall configuration example of a welding operation management system according to an embodiment of the present invention. As shown in FIG. 1, a welding operation management system according to the present embodiment includes a welding operation management device 10, a welding operation terminal 20, a printer 30, and a label printer 40.

The welding operation management device 10 is a computer that creates various kinds of information (hereinafter, referred to as "welding operation instruction information") issuing instructions to the welder concerning the welding method, execution location and the like based on specifications of the weld joint (welding portion) (hereinafter, referred to as "weld joint specifications") of pipe in plant construction work.

The welding operation terminal 20 is a computer that acquires welding operation instruction information from the welding operation management device 10 and the welder performs a welding operation based on the welding operation instruction information displayed in the terminal.

As shown in FIG. 1, the welding operation management device 10 includes a database unit 101, a weld joint specification input unit 102, a weld joint specification inspection unit 103, a weld joint specification registration unit 104, a weld material identification unit 105, a welding qualification identification unit 106, a welding operation instruction unit 107, a weld joint identification label creation unit 108, a weld material delivery management unit 109, a welding execution information management unit 110, and a data communication unit 111.

The database unit 101 is a database including a weld joint specification table 101a, a welding portion thickness identification table 101b, a welding execution method table 101c, a material/base metal class conversion table 101d, a welding execution method/joint design correspondence table 101e, a weld material identification table 101f, a welding qualification identification table 101g, a possessed welding qualification table 101h, a weld material delivery information table 101i, and a welding execution information table 101j.

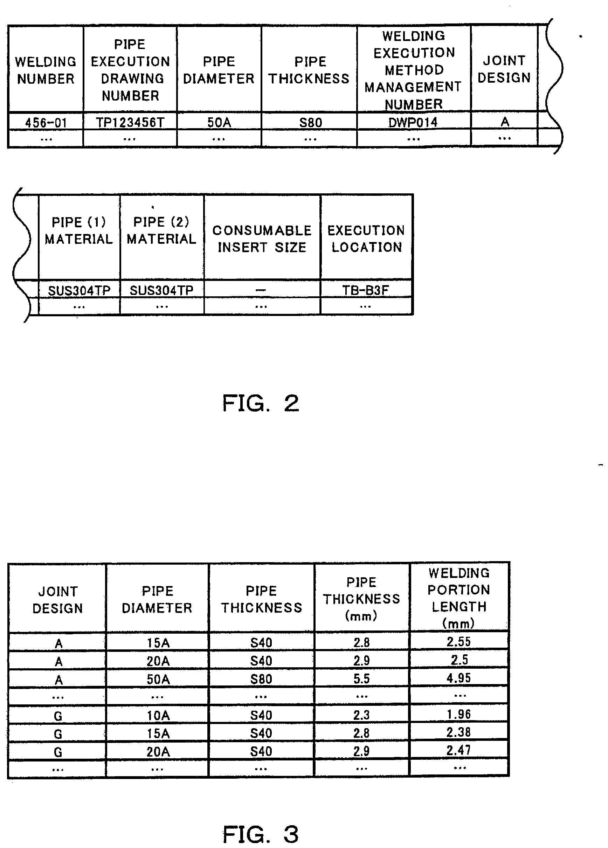

The weld joint specification table 101a is a table that stores at least the material of pipe, joint design, pipe diameter, pipe thickness, welding execution method management number, and execution location by associating with the weld joint number as weld joint specifications between pipes mutually welded in plant construction work. FIG. 2 is a diagram showing a concrete example of the weld joint specification table 101a.

The welding portion thickness identification table 101b is a table that stores the pipe joint design, pipe diameter (pipe caliber), and pipe thickness by associating with the thickness of a welding portion. FIG. 3 is a diagram showing a concrete example of the welding portion thickness identification table 101b.

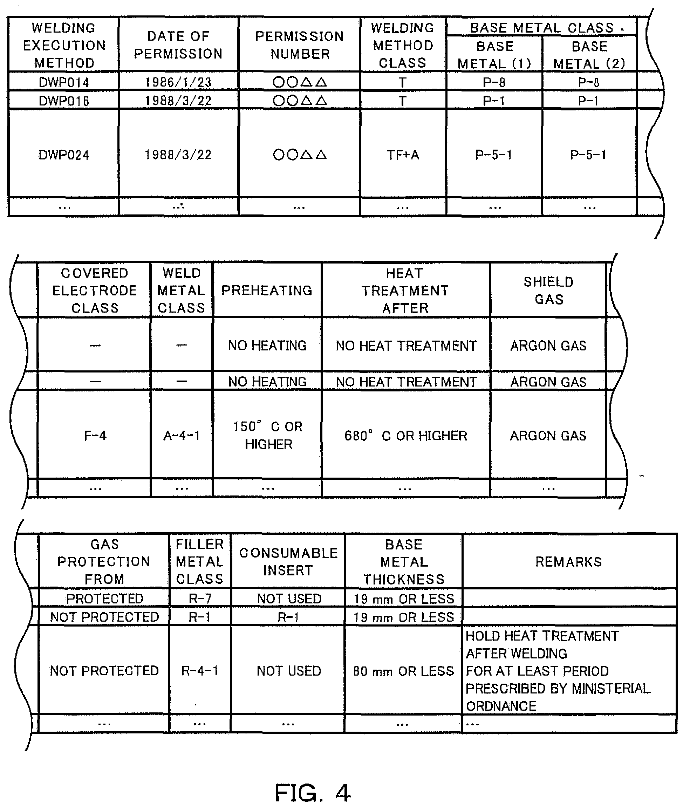

The welding execution method table 101c is a table that stores base metal classes classifying materials of pipe, weld material classes classifying weld materials (covered electrode/filler metal) used for welding, and welding method classes classifying welding execution method management numbers by associating with the welding execution method management number. FIG. 4 is a diagram showing a concrete example of the welding execution method table 101c.

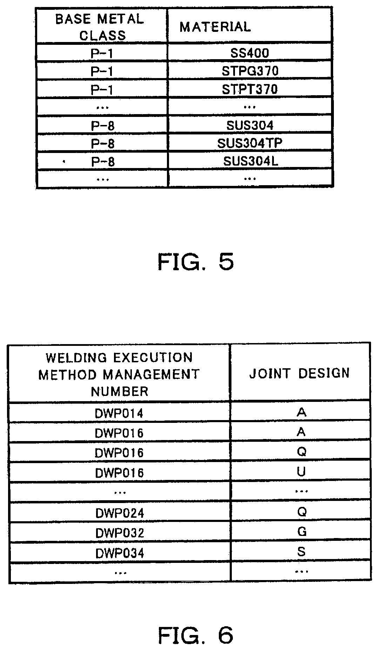

The material/base metal class conversion table 101d is a table that stores by associating materials of pipe and base metal classes. FIG. 5 is a diagram showing a concrete
example of the material/base metal class conversion table 101d.

The welding execution method/joint design correspondence table 101e is a table that stores by associating the welding execution method management number and the joint design. FIG. 6 is a diagram showing a concrete example of the welding execution method/joint design correspondence table 101e.

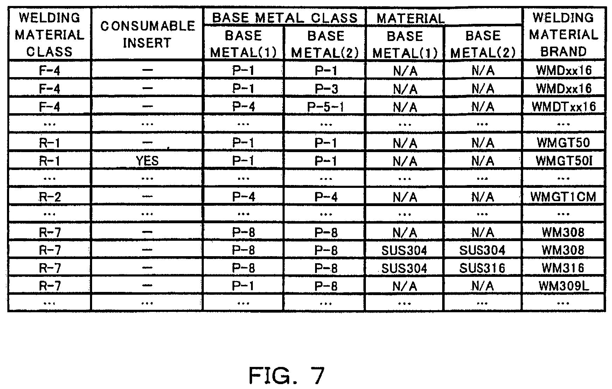

The weld material identification table 101f is a table that stores base metal classes of pipe, material of pipe, and weld material classes by associating with weld materials (weld material brands). FIG. 7 is a diagram showing a concrete example of the weld material identification table 101f .

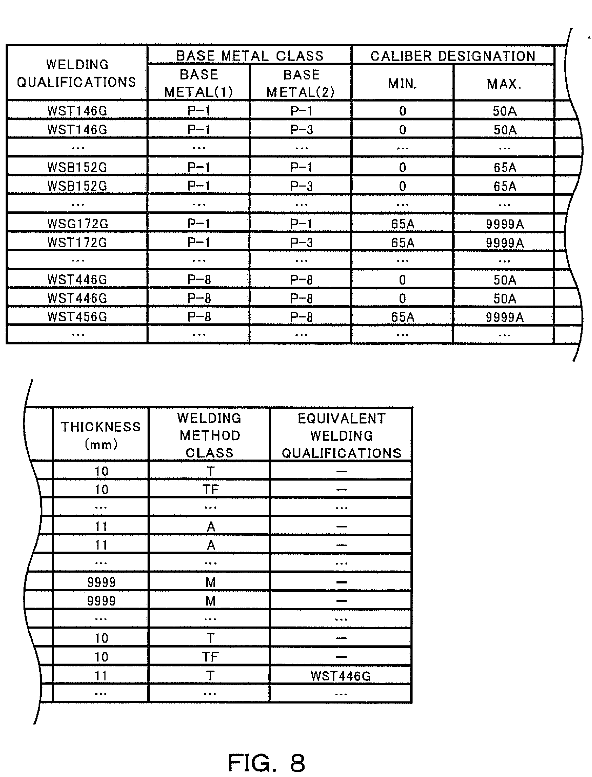

The welding qualification identification table 101g is a table that stores welding method classes, base metal classes, and pipe diameters by associating with welding qualifications required for welding operations. FIG. 8 is a diagram showing a concrete example of the welding qualification identification table 101g.

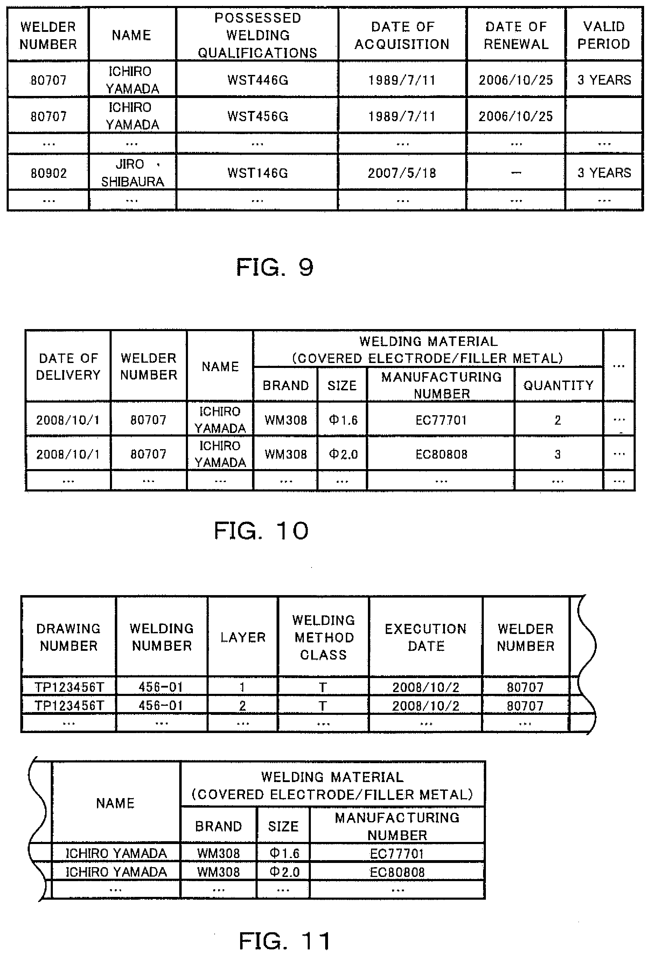

The possessed welding qualification table 101h is a table that stores by associating welder identification information and possessed welding qualifications. FIG. 9 is a diagram showing a concrete example of the possessed welding qualification table 101h.

The weld material delivery information table 101i is a table that stores brands, manufacturing numbers, and quantities of weld materials delivered by the welder for welding operations as weld material delivery information. FIG. 10 is a diagram showing a concrete example of the weld material delivery information table 101i.

The welding execution information table 101j is a table that stores welding operation information acquired from the welding operation terminal 20 used by the welder for welding operations. FIG. 11 is a diagram showing a concrete example of the welding execution information table 101j.

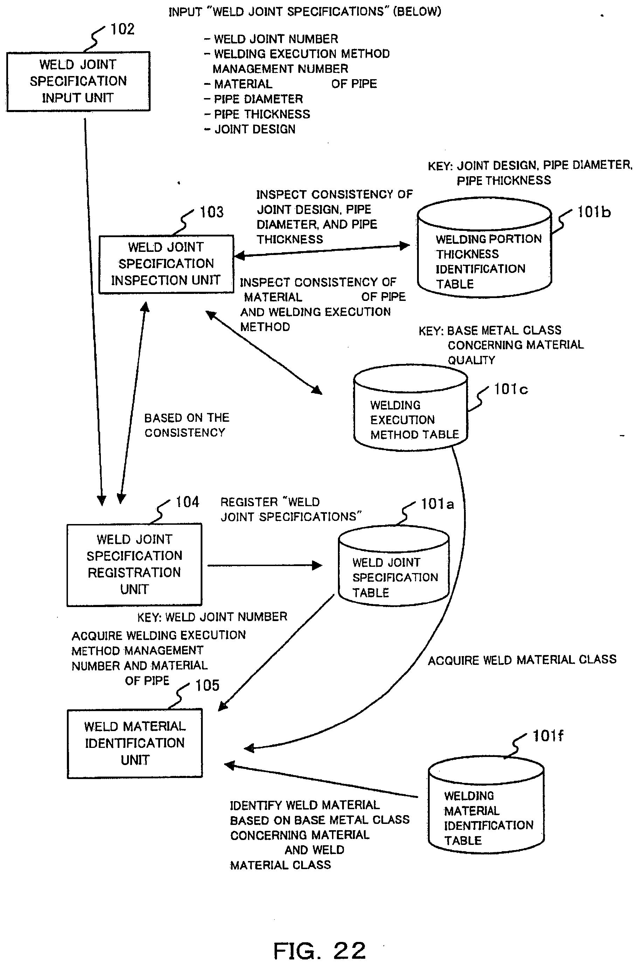

FIG. 22 is a correlation diagram of each program and a device for inspection and registration of weld joint specifications and identification of weld materials.

As shown in FIG. 22, the weld joint specification input unit 102 is a program that inputs welding joint specifications such as the welding joint number, welding execution method management number, joint design, material of pipe, pipe diameter, and pipe thickness via a registration screen displayed by a GUI (Graphical User Interface).

As shown in FIG. 22, the weld joint specification inspection unit 103 is a program that inspects consistency of the joint design, pipe diameter, and pipe thickness by referring to the welding portion thickness identification table 101b using the joint design, pipe diameter, and pipe thickness input through the weld joint specification input unit 102 as keys and also inspects consistency of a combination of materials of pipes and welding execution methods by referring to the welding execution method table 101c using base metal classes concerning material as a key.

As shown in FIG. 22, the weld joint specification registration unit 104 is a program that registers welding joint specifications input through the weld joint specification input unit 102 based on inspection results by the weld joint specification inspection unit 103 with the weld joint specification table 101a. In the weld joint specification table 101a, weld joint specifications are stored in registration units of the identification number (welding number) assigned to each weld joint (welding portion).

As shown in FIG. 22, the weld material identification unit 105 is a program that acquires the welding execution method management number and material of pipe concerning a desired weld joint from the weld joint specification table 101a and also acquires the weld material class from the welding execution method table 101c to identify the weld materials concerning the weld joint from the weld material identification table 101f based on the base metal class of the acquired material and the weld material class.

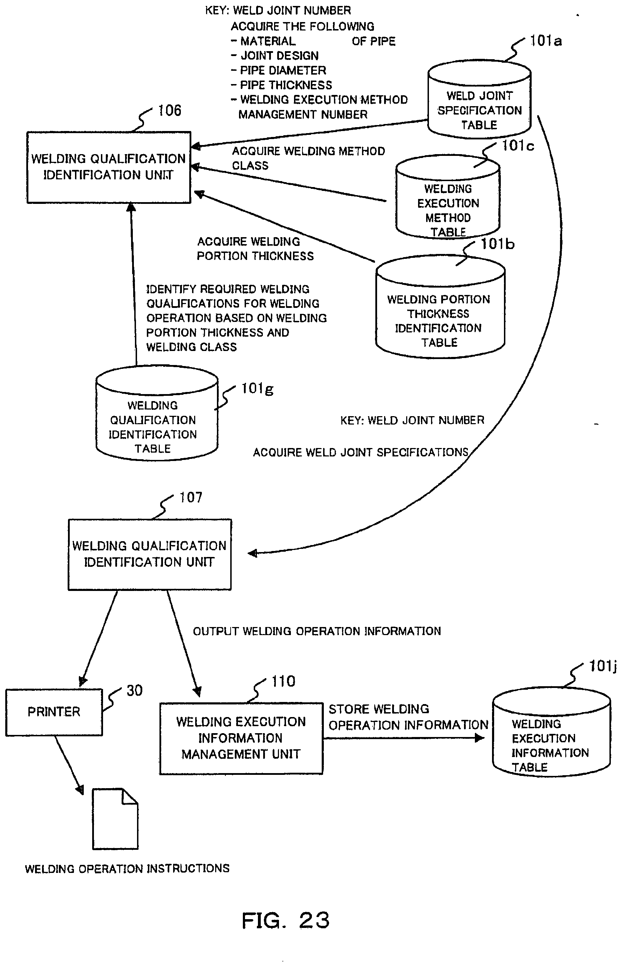

FIG. 23 is a correlation diagram of each program and the device for identification of weld joint specifications and welding operation instructions. As shown in FIG. 23, the welding qualification identification unit 106 is a program that acquires the material of pipe, joint design, pipe diameter, pipe thickness, and welding operation method management number concerning a desired weld joint from the weld joint specification table 101a and also acquires the welding method class from the welding execution method table 101c and the welding portion thickness from the welding portion thickness identification table 101b to identify welding qualifications required for the welding operation (hereinafter, referred to as "required welding qualifications") for each weld joint from the welding qualification identification table 101g based on the base metal class concerning the material of pipe, welding portion thickness, and welding method class.

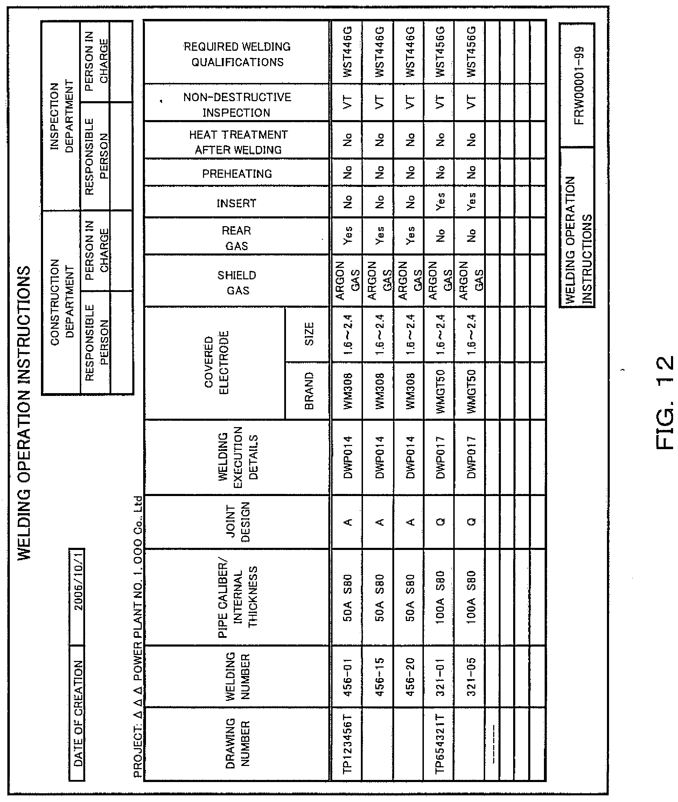

As shown in FIG. 23, the welding operation instruction unit 107 is a program that creates welding operation instruction information that associates weld materials identified by the weld material identification unit 105 and required welding qualifications identified by the welding qualification identification unit 106 for each weld joint based on welding joint specifications acquired from the weld joint specification table 101a using the welding joint identification number as a key. The welding operation instruction unit 107 also outputs welding operation instruction information to the welding execution information management unit 110 to cause the welding execution information management unit 110 to store the welding operation instruction information in the welding execution information table 101j as weld operation information containing no welding operation results. The welding operation instruction information is also output from the printer 30 as welding operation instructions in accordance with an output request from the user. Similarly, welding execution details are also output as detailed information of the welding execution. FIG. 12 is a diagram showing a concrete example of welding operation instructions.

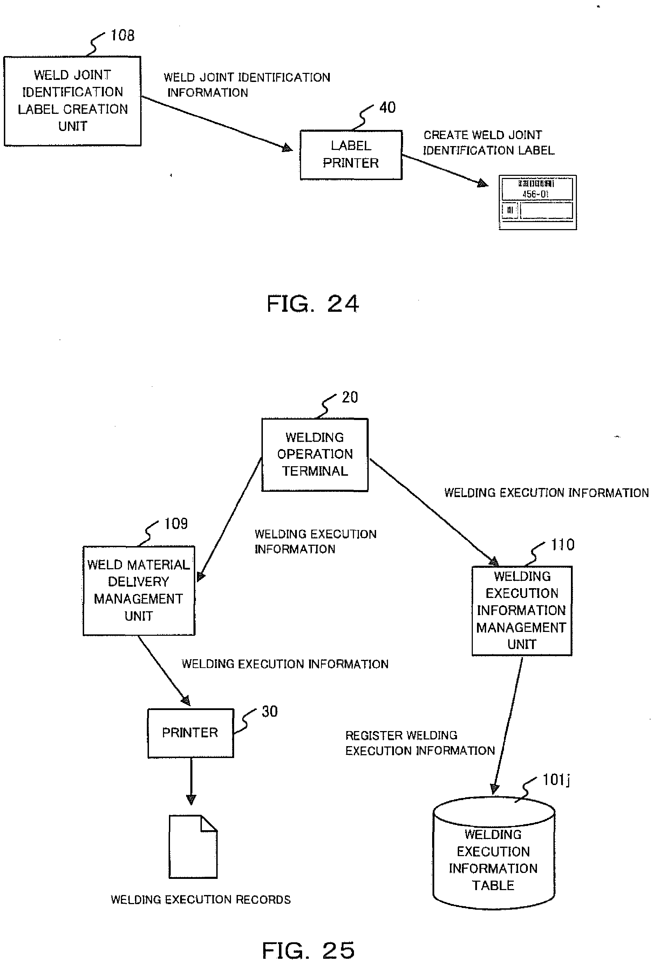

FIG. 24 is a correlation diagram of each program and the device for creation of a weld joint identification label. As shown in FIG. 24, the weld joint identification label creation unit 108 is a program that outputs weld joint identification information to the label printer 40 to cause the label printer 40 to create a weld joint identification label.

FIG. 25 is a correlation diagram of each program and the device for registration of welding execution information. As shown in FIG. 25, the weld material delivery management unit 109 is a program that creates weld material delivery slips to receive delivery of materials (such as the covered electrode/filler metal) necessary for welding operation from the weld material warehouse. Materials necessary for welding operations are listed in the screen of the welding operation terminal 20 based on welding operation instruction information captured by the welding operation terminal 20 and slips are automatically created after the welder inputs necessary quantities from the terminal.

As shown in FIG. 25, if the welding operation terminal 20 with which information of delivery slips drafted by the welder is registered is connected to a weld material warehouse administrator terminal (not illustrated) connected to the welding operation management device 10 in the weld material warehouse, the weld material delivery management unit 109 also displays the delivery information in the terminal. Then, if the weld material warehouse administrator inputs delivery quantities and manufacturing numbers of weld materials, the weld material delivery management unit 109 registers the delivery information with the weld material delivery information table 101i.

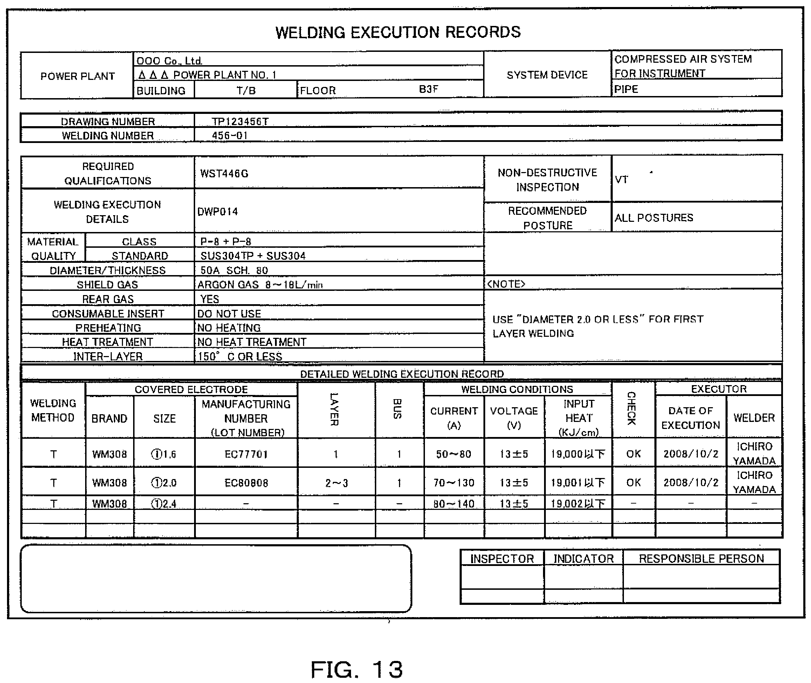

As shown in FIG. 25, the welding execution information management unit 110 is a program that acquires welding execution information input by the welder for the welding operation from the welding operation terminal 20 and also registers the welding execution information with the welding execution information table 101j. Registered welding execution information is output from the printer 30 as welding execution records in accordance with an output request from the user. FIG. 13 is a diagram showing a concrete example of welding execution records.

The data communication unit 111 is a program that receives data transmitted from the welding operation terminal 20 by wire or by radio by a communication device (not illustrated) and also transmits data and processing requests created by each unit of the welding operation management device 10 to the welding operation terminal 20.

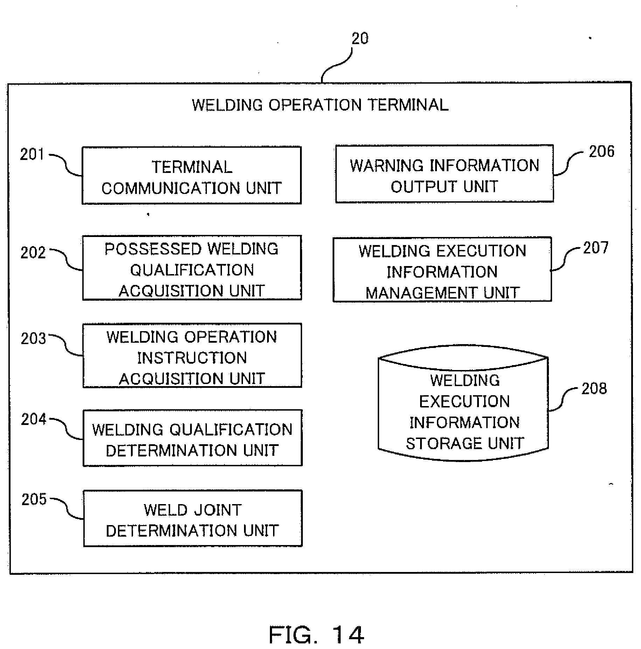

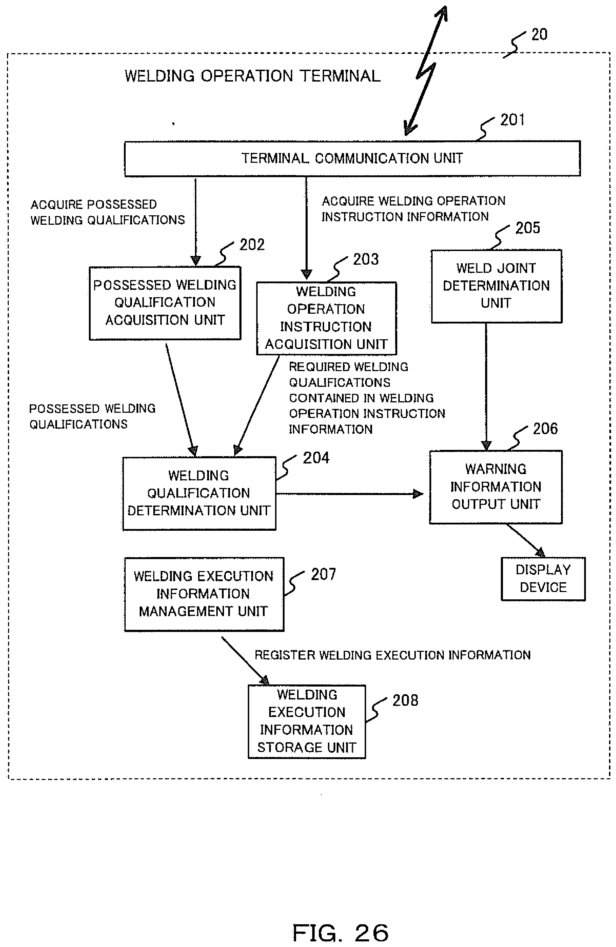

FIG. 14 is a block diagram showing a configuration example of the welding operation terminal 20. As shown in FIG. 14, the welding operation terminal 20 includes a terminal communication unit 201, a possessed welding qualification acquisition unit 202, a welding operation instruction acquisition unit 203, a welding qualification determination unit 204, a weld joint determination unit 205, a warning information output unit 206, a welding execution information management unit 207, and a welding execution information storage unit 208. FIG. 26 is a correlation diagram of each program of the welding operation terminal shown in FIG. 14.

The terminal communication unit 201 is a program that receives data transmitted from the welding operation management device 10 by wire or by radio by a communication device (not illustrated) and also transmits data and processing requests created by each unit of the welding operation terminal 20 to the welding operation management device 10.

The possessed welding qualification acquisition unit 202 is a program that acquires possessed welding qualifications of the welder via the terminal communication unit 201 by referring to the possessed welding qualification table 101h using the identification information of the welder as a key.

The welding operation instruction acquisition unit 203 is a program that acquires welding operation instruction information created by the welding operation management device 10 via the terminal communication unit 201. In the present embodiment, a welding operation instruction number marked as a barcode in welding operation instructions is read by a barcode reader (not illustrated) and the welding operation instruction number is used as a key to acquire welding operation instruction information from the welding operation management device 10.

The welding qualification determination unit 204 is a program that determines whether required welding qualifications contained in the welding operation instruction information acquired by the welding operation instruction acquisition unit 203 and possessed welding qualifications acquired by the possessed welding qualification acquisition unit 202 match for each weld joint.

The weld joint determination unit 205 is a program that determines, when the barcode of a weld joint identification label appended to a weld joint is read by the barcode reader (not illustrated), whether the weld joint is a weld joint instructed by welding operation specifications.

The warning information output unit 206 is a program that outputs warning information to a display device (not illustrated) included in the terminal based on determination results by the welding qualification determination unit 204 and the weld joint determination unit 205. The method of outputting warning information is not limited to the screen display and sound, light, vibration or the like may also be used.

The welding execution information management unit 207 is a program that creates weld procedure information by adding operation result information to the welding operation instruction information acquired by the welding operation instruction acquisition unit 203 and registers the weld procedure information with the welding execution information storage unit 208.

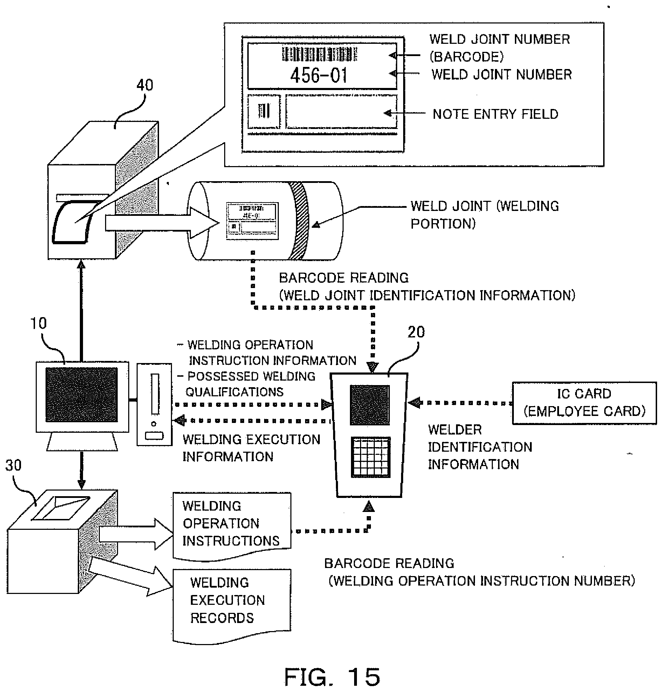

FIG. 15 is a correlation diagram illustrating an operation of a welding operation management system according to an embodiment of the present invention. First, when weld joint specifications are created by the welding operation management device 10, welding operation instructions are output from the printer 30.

Next, as shown in FIG. 24, when weld joint specifications are decided by the welding operation management device 10 (weld joint identification label creation unit 108), a welding joint identification label is output from the label printer 40 and the label is appended to the applicable pipe.

Next, as a preparation stage of the welding operation, when a welder uses an IC card reader (not illustrated) of the welding operation terminal 20 to read welder identification information from the IC card (such as an employee card) possessed by the welder, the welder identification information is used as a key to acquire possessed welding qualifications of the welder from the welding operation management device 10. When the barcode reader (not illustrated) of the welding operation terminal 20 is used to read a barcode marked in welding operation instructions, the welding operation instruction number represented by the barcode is used as a key to acquire welding operation instruction information from the welding operation management device 10.

As shown in FIG. 26, the welding operation terminal 20 compares acquired possessed welding qualifications and required welding qualifications of the welding operation instruction information to perform determination processing to determine whether the welder possesses required qualifications. Similarly, when the welder uses the barcode reader (not illustrated) of the welding operation terminal 20 to read the barcode marked on a weld joint identification label appended to a pipe, the welding operation terminal 20 compares weld joint identification information and the weld joint number of the welding operation instruction information to perform determination processing to determine whether the weld joint is intended for the welding operation. If execution conditions for a welding operation are determined to be satisfied in the determination processing, the welder performs the welding operation following the welding operation terminal 20 and creates a welding execution record.

Next, as shown in FIG. 25, the welding execution record is transmitted to the welding operation management device 10 (welding execution information management unit 110) before being stored in the database unit 101 (welding execution information table 101j). Then, if an output request of a welding execution record is made from the welding operation management device 10, welding operation instructions are output from the printer 30 to end a sequence of processes.

Processing of the weld joint specification inspection unit 103, the weld material identification unit 105, and the welding qualification identification unit 106 will be described in detail below.

### <Inspection of weld joint specifications>

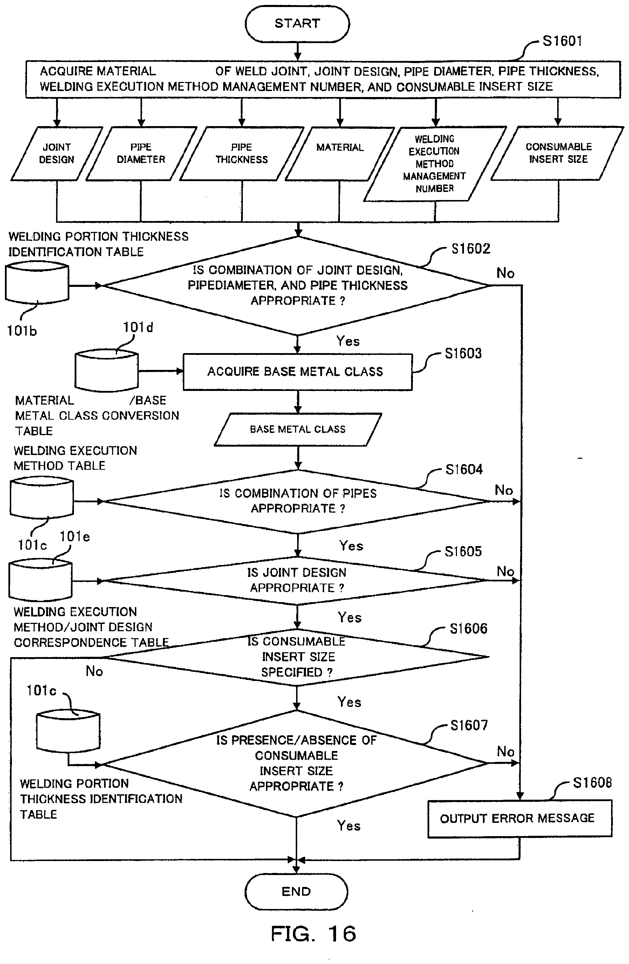

FIG. 16 is a flow chart showing a concrete example of processing of the weld joint specification inspection unit 103.

In S1601, as shown in FIG. 22, weld joint specifications (such as the material, joint design, pipe diameter, pipe thickness, welding execution method management number, and consumable insert size) input from the weld joint specification input unit 102 via the registration screen (not illustrated) are acquired. As weld joint specifications, for example, "welding number (weld joint number): 456-01, pipe diameter: 50A, pipe thickness: S80, welding execution method management number: DWP014, joint design: A, material of base metal (1): SUS304TP, material of base metal (2): SUS304TP" are acquired.

In S1602, the welding portion thickness identification table 101b is referred to based on the joint design, pipe diameter, and pipe thickness contained in the weld joint specifications to determine whether the combination thereof is appropriate. If the combination of the joint design, pipe diameter, and pipe thickness contained in the input weld joint specifications exists in the welding portion thickness identification table 101b and the combination is determined to be appropriate, the processing proceeds to S1603. By contract, if the combination thereof is determined to be inappropriate, the processing proceeds to S1608. If the welding portion thickness identification table 101b shown in FIG. 3 is referred to, for example, while the combination "joint design: A, pipe diameter: 50A, pipe thickness: S80" exists in the table and is determined to be appropriate, the combination "joint design: A, pipe diameter: 10A, pipe thickness: S40" does not exist in the table and is determined to be inappropriate.

In S1603, the material/base metal class conversion table 101d is referred to based on the material of the base metal (1) and base metal (2) contained in the weld joint specifications to acquire the base metal class. If the material/base metal class conversion table 101d shown in FIG. 5 is referred to, for example, when the material contained in the weld joint specifications is "SUS304TP", "P-8" is acquired as the base metal class.

In S1604, the welding execution method table 101c is referred to based on the base metal class of the base metal (1) and base metal (2) to be welded and the welding execution method management number to determine whether the combination of pipe materials is appropriate. If the combination of pipe materials is determined to be appropriate, the processing proceeds to S1605. By contract, if the combination of the base metal (1) and base metal (2) is determined to be inappropriate, the processing proceeds to S1608. If the welding execution method table 101c shown in FIG. 4 is referred to, for example, when the base metal class of the base metal (1) and base metal (2) is "P-8" for both and the welding execution method number is "DWP014", the data exists in the table and the combination is determined to be appropriate. When the base metal classes of the base metal (1) and base metal (2) are "P-1" and "P-5-1" and the welding execution method number is "DWP014", the corresponding data does not exist in the table and the combination is determined to be inappropriate.

In S1605, the welding execution method/joint design correspondence table 101e is referred to based on the joint design and welding execution method management number contained in the weld joint specifications to determine whether the joint design is appropriate for the welding execution method. If the joint design is determined to be appropriate, the processing proceeds to S1606. By contrast, if the joint design is determined to be inappropriate, the processing proceeds to S1608. If the welding execution method/joint design correspondence table 101e shown in FIG. 6 is referred to, for example, when the welding execution method management number contained in the weld joint specifications is "DWP014", if the joint design is "A", the joint design is determined to be appropriate, and if the joint design is "Q", the joint design is determined to be inappropriate.

In S1606, whether any consumable insert size in the weld joint specifications is specified is determined. If it is determined that a consumable insert size is specified, the processing proceeds to S1607. By contrast, if it is determined that no consumable insert size is specified, the processing is terminated.

In S1607, the welding execution method table 101c is referred to based on the welding execution method management number contained in the weld joint specifications to determine whether presence/absence of the consumable insert is appropriate for the welding execution method. If presence/absence of the consumable insert is determined to be appropriate, the processing is terminated. By contrast, if presence/absence of the consumable insert is determined to be inappropriate, the processing proceeds to S1608. If the welding execution method table 101c shown in FIG. 4 is referred to, for example, when the size of the consumable insert is specified in the weld joint specifications and when the welding execution method management number is "DWP014", no use of the consumable insert is defined in the table and thus, the presence thereof is determined to be inappropriate.

In S1608, a relevant error message is output to the display device (not illustrated) to prompt for correction input before the processing being terminated.

### <Identification of weld materials>

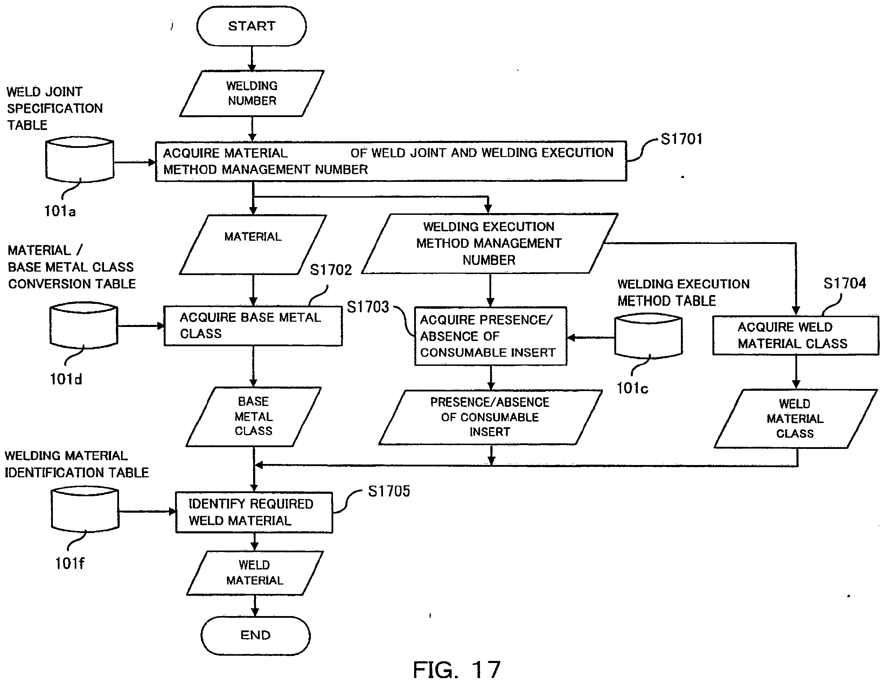

FIG. 17 is a flow chart showing a concrete example of processing of the weld material identification unit 105.

In S1701, as shown in FIG. 22, the weld joint specification table 101a is referred to by using the weld joint number as a key to acquire weld joint specifications (the material and welding execution method management number). If the weld joint specification table 101a shown in FIG. 2 is referred to, for example, "pipe diameter: 50A, pipe thickness: S80, welding execution method management number: DWP014, joint design: A, material of base metal (1): SUS304TP, material of base metal (2): SUS304TP" is acquired as weld joint specifications whose welding number (weld joint number) is "456-01".

In S1702, the material/base metal class conversion table 101d is referred to based on the material of the base metal (1) and base metal (2) contained in the weld joint specifications to acquire the base metal class. If the material/base metal class conversion table 101d shown in FIG. 5 is referred to, for example, when the material contained in the weld joint specifications is "SUS304TP", "P-8" is acquired as the base metal class.

In S1703, the welding execution method table 101c is referred to by using the welding execution method management number contained in the weld joint specifications as a key to acquire presence/absence of a consumable insert. If the welding execution method table 101c shown in FIG. 4 is referred to, for example, when the welding execution method management number is "DWP014", information containing no consumable insert is obtained.

In S1704, the welding execution method table 101c is referred to by using the welding execution method management number contained in the weld joint specifications as a key to acquire the weld material class (covered electrode class and the filler metal class) for each of the base metal (1) and base metal (2). If the welding execution method table 101c shown in FIG. 4 is referred to, for example, when the welding execution method management number is "DWP014", "covered electrode class: none, filler metal class: R-1" is acquired.

In S1705, the weld material identification table 101f is referred to based on the acquired base metal classes of the base metal (1) and base metal (2), presence/absence of the consumable insert, and weld material class to identify weld materials (such as weld material brands) before the processing being terminated. If the weld material identification table 101f shown in FIG. 7 is referred to, for example, when "weld material class: R-1, consumable insert: none, base metal class of the base metal (1) and base metal (2): P-8, material: SUS304", "WM308" is identified as the weld material brand.

### <Identification of welding qualifications>

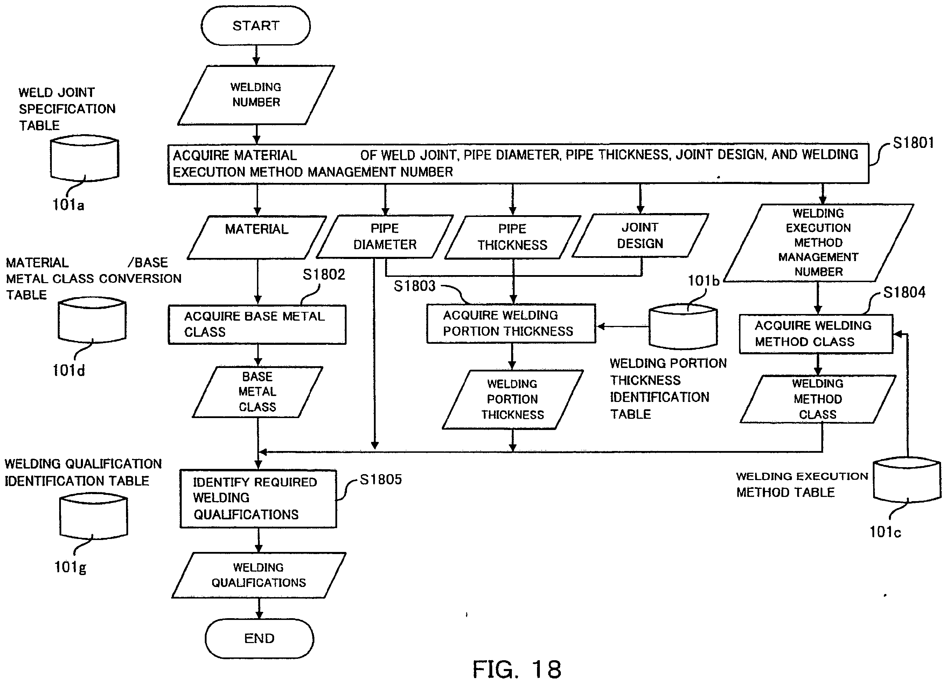

FIG. 18 is a flow chart showing a concrete example of processing of the welding qualification identification unit 106.

In S1801, as shown in FIG. 23, the weld joint specification table 101a is referred to by using the weld joint number as a key to acquire weld joint specifications (material, joint design, pipe diameter, pipe thickness, and welding execution method management number). The weld joint specification table 101a shown in FIG. 2 is referred to, for example, "pipe diameter: 50A, pipe thickness: S80, welding execution method management number: DWP014, joint design: A, material of base metal (1) : SUS304TP, material of base metal (2): SUS304TP" is acquired as weld joint specifications whose welding number (weld joint number) is "456-01".

In S1802, the material/base metal class conversion table 101d is referred to based on the materials of the base metal (1) and base metal (2) contained in the weld joint specifications to acquire the corresponding base metal classes. If the material/base metal class conversion table 101d shown in FIG. 5 is referred to, for example, when the material contained in the weld joint specifications is "SUS304TP", "P-8" is acquired as the base metal class.

In S1803, the welding portion thickness identification table 101b is referred to based on the pipe diameter, pipe thickness, and joint design contained in the weld joint specifications to acquire the welding portion thickness. If the welding portion thickness identification table 101b shown in FIG. 3 is referred to, for example, when "pipe diameter: 50A, pipe thickness: S80, joint design: A", the welding portion thickness is identified as 4.95 mm.

In S1804, the welding execution method table 101c is referred to by using the welding execution method management number contained in the weld joint specifications as a key to acquire the welding method class.

In S1805, the welding qualification identification table 101g based on the acquired base metal classes of the base metal (1) and base metal (2), welding portion thickness, and welding method class to identify welding qualifications required for the welding operation before the processing being terminated. If the welding qualification identification table 101g shown in FIG. 8 is referred to, for example, when "base metal class of the base metals (1) and (2) : P-8, material of the base metals (1) and (2): SUS304TP, pipe diameter: 50A, welding method class: T", "WST446G" is identified as required welding qualifications. Therefore, "WST446G" is recorded as required welding qualifications in welding operation instruction information. If the possessed welding qualification table 101h shown in FIG. 9 is referred to, it is clear that the welder "welder number: 080707, name: Ichiro Yamada" possesses required welding qualifications.

### <Effects of the present embodiment>

As described above, the following effects can be achieved by constructing a welding operation management system according to the present embodiment:
(1) Weld materials used for a welding operation and welding qualifications required for the welding operation can easily be identified.
(2) Mismatching of weld joint specifications can be prevented, improving design of weld joint specifications.
(3) Efficiency and reliability of welding operations and welding management work are improved. For example, the progress of each weld joint and usage of weld materials can be grasped correctly from a database group.
(4) Required welding qualifications derived from weld joint specifications and possessed welding qualifications of a welder are compared before a welding operation so that the welding operation can be performed by a suitable welder.
(5) In pipe inspection after the execution of work, an inspection list in accordance with the progress of inspection of each weld joint based on database storage content can be output so that erroneous inspection steps and skips of inspection items can be prevented. Moreover, there is no need to change content of the inspection list each time execution drawings are revised so that savings in labor can be achieved.

Incidentally, the present invention is not limited to the above embodiment as it is and can be embodied by modifying structural elements without deviating from the scope of the appended claims.

### REFERENCE SIGNS LIST

- 10: Welding operation management device
- 20: Welding operation terminal
- 30: Printer
- 40: Label printer
- 101: Database unit
- 101a: Weld joint specification table
- 101b: Welding portion thickness identification table
- 101c: Welding execution method table
- 101d: Material/base metal class conversion table
- 101e: Welding execution method/joint design correspondence table
- 101f: Weld material identification table
- 101g: Welding qualification identification table
- 101h: Possessed welding qualification table
- 101i: Weld material delivery information table
- 101j: Welding execution information table
- 102: Weld joint specification input unit
- 103: Weld joint specification inspection unit
- 104: Weld joint specification registration unit
- 105: Weld material identification unit
- 106: Welding qualification identification unit
- 107: Welding operation instruction unit
- 108: Weld joint identification label creation unit
- 109: Weld material delivery management unit
- 110: Welding execution information management unit
- 111: Data communication unit
- 201: Terminal communication unit
- 202: Possessed welding qualification acquisition unit
- 203: Welding operation instruction acquisition unit
- 204: Welding qualification determination unit
- 205: Weld joint determination unit
- 206: Warning information output unit
- 207: Welding execution information management unit
- 208: Welding execution information storage unit

## Claims

1. A welding operation management device (10), comprising:
a weld joint specification input unit (102) that inputs at least an identifier of a weld joint, a welding execution method management number, a joint design, materials of each of two pipes, a pipe diameter, and a pipe thickness as weld joint specifications between the pipes mutually welded in plant construction work;
a welding portion thickness identification table (101b) that stores a plurality of different combinations of the joint design, the pipe diameter, and the pipe thickness by associating with a respective thickness of a welding portion of the weld joint between the pipes;
a welding execution method table (101c) that stores a plurality of different combinations of a pair of base metal classes classifying the materials of the pipes by associating with the respective welding execution method management numbers; and
a weld joint specification inspection unit (103) that refers to the welding portion thickness identification table (101b) using the joint design, the pipe diameter, and the pipe thickness having been input as keys to inspect consistency of a first combination of the joint design, the pipe diameter, and the pipe thickness by detecting that the corresponding data of the first combination exists in the welding portion thickness identification table, and also refers to the welding execution method table (101c) using a pair of the base metal classes concerning the respective materials of the pipes having been input as the key to inspect the consistency of a second combination of the materials of the pipes and the welding execution method management number by detecting that the corresponding data of the second combination exists in the welding execution method table.

2. The welding operation management device (10) according to claim 1,
wherein the welding execution method table (101c) stores a plurality of different combinations of a pair of the base metal classes and weld material classes classifying weld materials used for welding by associating with the respective welding execution method management numbers; and
wherein the welding operation management device (10), further comprises:
a weld joint specification table (101a) that stores the weld joint specifications;
a weld joint specification registration unit (104) that registers the weld joint specifications with the weld joint specification table (101a) if the weld joint specification inspection unit (103) detects that the corresponding data of the first combination exists in the welding portion thickness identification table (101b) and the corresponding data of the second combination exists in the welding execution method table (101c);
a weld material identification table (101f) that stores a plurality of different combinations of a pair of the base metal classes of the pipes and the weld material classes by associating with brands of the weld materials; and
a weld material identification unit (105) that acquires the welding execution method management number and a pair of the materials of the pipes concerning the weld joint from the weld joint specification table (101a), and acquires the weld material class from the welding execution method table (101c) based on the welding execution method management number having been acquired, and identifies the brands of weld material from the weld material identification table (101f) based on a combination of a pair of the base metal classes and the weld material class having been acquired..

3. The welding operation management device (10) according to claim 1, further comprising:
a weld joint specification table (101a) that stores a plurality of weld joint specifications; and
a weld joint specification registration unit (109) that registers the weld joint specifications with the weld joint specification table (101a) if the weld joint specification inspection unit (103) detects that the corresponding data of the first combination exists in the welding portion thickness identification table (101b) and the corresponding data of the second combination exists in the welding execution method table (101c).

4. The welding operation management device (10) according to claim 1,
wherein the welding execution method table (101c) stores a plurality of different combinations of a pair of the base metal classes and welding method classes classifying a welding execution method used for welding by associating with the respective welding execution method management numbers; and
wherein the welding operation management device (10), further comprises:
a welding qualification identification table (101g) that stores a plurality of different combinations of the welding method classes, the base metal classes, and the pipe diameter by associating with respective welding qualifications required for welding operations;
a weld joint specification table (101a) that stores a plurality of the weld joint specifications; and
a welding qualification identification unit (106) that acquires the respective materials of the pipes, the joint design, the pipe diameter, the pipe thickness, and the welding execution method management number concerning the desired weld joint from the weld joint specification table (101a) and also acquires the welding method class from the welding execution method table (101c) based on the acquired welding execution method management number, and identifies the welding qualifications concerning the weld joint from the welding qualification identification table (101g) based on a combination of a pair of the base metal classes, the pipe diameter, and the welding method class acquired.

5. The welding operation management device (10) according to claim 1,
wherein the weld joint specification input unit (102) inputs at least an identifier of the weld joint, the welding execution method management number, the joint design, a pair of the materials of the pipes, the pipe diameter, and the pipe thickness as the weld joint specifications via a registration screen displayed by a GUI.

6. The welding operation management device (10) according to claim 1,
wherein the welding execution method table (101c) stores a plurality of different combinations of a pair of the base metal classes, weld material classes classifying brands of a weld materials used for welding and welding method classes classifying the welding execution methods by associating with the respective welding execution method management numbers, and
wherein the welding operation management device (10) further comprises:
a weld joint specification table (101a) that stores a plurality of weld joint specifications;
a welding qualification identification table (101g) that stores a plurality of different combinations of the welding method classes, a pair of the base metal classes, and the pipe diameter by associating with respective welding qualifications required for welding operations;
a welding qualification identification unit (106) that acquires a pair of the materials of the pipes, the joint design, the pipe diameter, the pipe thickness, and a welding execution method concerning the desired weld joint from the weld joint specification table (101a) and also acquires the welding method class from the welding execution method table (101c) based on the acquired welding execution method management number, and identifies the welding qualifications concerning the weld joint from the welding qualification identification table (101a) based on a combination of a pair of the base metal classes, the thickness of the welding portion, the pipe diameter, and the welding method class acquired;
a weld material identification table (101f) that stores a plurality of different combinations of a pair of the base metal classes of the pipes, the materials of the pipes, and the weld material classes by associating with respective brands of the weld materials;
a weld material identification unit (105) that acquires the welding execution method management number and respective materials of the pipes concerning the weld joint from the weld joint specification table and acquires the weld material class from the welding execution method table based on the welding execution method management number having been acquired, and identifies the weld material from the weld material identification table based on a combination of a pair of the base metal classes and the weld material class having been acquired;
a welding operation instruction unit (107) that creates the welding operation instruction information that associates a combination of the weld materials and the welding qualifications having been identified with the respective weld joints; and
a possessed welding qualification table (101h) that stores a plurality of different combinations of identification information of a welder and possessed welding qualifications.

7. A welding operation management method, comprising:
a weld joint specification acquisition step (S1701) of acquiring weld joint specifications from a weld joint specification table (101a) that stores a plurality of different combinations of materials of two pipes and a welding execution method management number by associating with a respective weld joint as the weld joint specifications between the pipes mutually welded in plant construction work using an identifier of the weld joint as a key;
a weld material class acquisition step (S1704) of acquiring a weld material class from a welding execution method table (101c) that stores a plurality of different combinations of a pair of base metal classes classifying respective materials of the pipes, and the weld material classes classifying weld materials used for welding by associating with the respective welding execution method management numbers based on the welding execution method contained in the weld joint specifications acquired in the weld joint specification acquisition step (S1701); and
a weld material identification step (S1705) of identifying the brands of weld material concerning the weld joint from a weld material identification table (101f) that stores a plurality of different combinations of a pair of the base metal classes and the weld material classes by associating with brands of the weld materials based on a combination of a pair of the base metal classes concerning the respective materials of the pipes contained in the weld joint specifications and the weld material class acquired in the weld material class acquisition step (S1704).

8. The welding operation management method according to claim 7, further comprising:
a second weld joint specification acquisition step (S1801) of acquiring weld joint specifications from the weld joint specification table (101a) that stores a plurality of different combinations of a joint design, a pipe diameter, a pipe thickness, and the welding execution method management number by associating with the respective weld joint as weld joint specifications between the pipes using an identifier of the weld joint as a key;
a welding method class acquisition step (S1804) of acquiring a pair of weld material classes from the welding execution method table (101c) that stores a plurality of different combinations of a pair of base metal classes classifying the respective materials of the pipes and welding method classes classifying the welding execution methods by associating with the respective welding execution method management numbers based on the welding execution method management number contained in the weld joint specifications acquired in the weld joint specification acquisition step (S1701); and
a welding qualification identification step (S1805) of identifying welding qualifications concerning the weld joint from a welding qualification identification table (101g) that stores a plurality of different combinations of a pair of the welding method classes, the base metal classes, and the pipe diameter by associating with the respective welding qualifications required for welding operations based on a combination of a pair of the base metal classes concerning the respective materials of the pipes and the pipe diameter contained in the weld joint specifications, the thickness of the welding portion acquired in the welding portion thickness acquisition step, and the welding method class acquired in the welding method class acquisition step (S1804).

9. The welding operation management method according to claim 7, further comprising:
a weld joint specification input step (S1601) of inputting at least materials of the respective pipes, a joint design, a pipe diameter, a pipe thickness, and the welding execution method management number by associating with the respective weld joint as the weld joint specifications via a registration screen displayed by a GUI;
a first consistency inspection step (S1602) of inspecting consistency of a first combination of the joint design, the pipe diameter, and the pipe thickness by referring to a welding portion thickness identification table (101b) that stores the joint design, the pipe diameter, and the pipe thickness by associating with a respective thickness of a welding portion using a combination of the joint design, the pipe diameter, and the pipe thickness input in the weld joint specification acquisition step (S1701) as keys to detect that the corresponding data of the first combination exists in the welding portion thickness identification table;
a second consistency inspection step (S1604) of inspecting the consistency of a second combination of a pair of the base metal classes concerning the respective materials of the pipes and the welding execution method management number by referring to the welding execution method table (101c) that stores base metal classes classifying the material and welding method classes classifying welding execution methods used for welding by associating with the respective welding execution method management numbers using a pair of the base metal classes concerning the materials of the pipes input in the weld joint specification input step (S1601) as the key to detect that the corresponding data of the second combination exists in the welding execution method table; and
a warning information output step (S1608) of outputting warning information about the input weld joint specifications based on inspection results in the first and second consistency inspection steps (S1602; S1604).

10. The welding operation management method according to claim 7, further comprising:
inputting at least an identifier of the weld joint, the welding execution method management number, a joint design of the pipe, the materials of the respective pipes, a pipe diameter, and a pipe thickness into a weld joint specification input unit (102) as weld joint specifications between the pipes mutually welded in plant construction work;
storing the joint design, the pipe diameter, and the pipe thickness in a welding portion thickness identification table (101b) by associating with a respective thickness of a welding portion;
storing the base metal classes, the weld material classes, and the welding method classes in the welding execution method table (101c) by associating with the respective welding execution method management numbers; and
inspecting consistency of a first combination of the joint design, the pipe diameter, and the pipe thickness by referring to the welding portion thickness identification table (101b) using a combination of the joint design, the pipe diameter, and the pipe thickness having been input as keys to detect that the corresponding data of the first combination exists in the welding portion thickness identification table (101b),
inspecting the consistency of a second combination of a pair of the base metal classes concerning the materials of the respective pipes and the welding execution method management number by referring to the welding execution method table (101c) using a combination of the base metal classes concerning the material as the key to detect that the corresponding data of the second combination exists in the welding execution method table (101c).

11. The welding operation management method according to claim 9, further comprising:
a weld joint specification registration step registering the weld joint specifications with the weld joint specification table (101a) that stores a plurality of the weld joint specifications if it is detected that the corresponding data of the first combination exists in the welding portion thickness identification table (101b) in the first consistency inspection step (S1602) and the corresponding data of the second combination exists in the welding execution method table (101c) in the second consistency inspection step (S1604).

## Patentansprüche

1. Vorrichtung (10) zur Verwaltung eines Schweißvorgangs mit:
einer Schweißverbindungsspezifikationseingabeeinheit (102), die mindestens eine Kennung einer Schweißverbindung, eine Verwaltungsnummer für ein Schweißausführungsverfahren, ein Verbindungsdesign, Materialien von jeweils zwei Rohren, einen Rohrdurchmesser und eine Rohrdicke als Schweißverbindungsspezifikationen zwischen den Rohren, die im Anlagenbau verschweißt werden, eingibt,
einer Schweißabschnittsdickenidentifikationstabelle (101b), die eine Mehrzahl von verschiedenen Kombinationen des Verbindungsdesign, des Rohrdurchmessers und der Rohrdicke durch Zuordnen zu einer jeweiligen Dicke eines Schweißabschnitts der Schweißverbindung zwischen den Rohren speichert,
einer Schweißausführungsverfahrenstabelle (101c), die eine Mehrzahl von verschiedenen Kombinationen eines Paares von Grundmetallklassen speichert, die die Materialien der Rohre durch Zuordnen zu den jeweiligen Verwaltungsnummern der Schweißausführungsverfahren klassifizieren, und
einer Schweißverbindungsspezifikationsüberprüfungseinheit (103), die sich auf die Schweißabschnittsdickenidentifikationstabelle (101b) unter Verwendung des Verbindungsdesigns, des Rohrdurchmessers und der Rohrdicke bezieht, wobei diese als Schlüssel eingegeben wurden, um die Konsistenz einer ersten Kombination aus dem Verbindungsdesign, dem Rohrdurchmesser und der Rohrdicke zu überprüfen, indem detektiert wird, dass die entsprechenden Daten der ersten Kombination in der Schweißabschnittsdickenidentifikationstabelle vorhanden sind, und die sich auch auf die Schweißausführungsverfahrenstabelle (101c) unter Verwendung eines Paares der Grundmetallklassen bezüglich der jeweiligen Materialien der Rohre bezieht, die als Schlüssel eingegeben wurden, um die Konsistenz einer zweiten Kombination der Materialien der Rohre und der Verwaltungsnummer des Schweißausführungsverfahrens zu überprüfen, indem detektiert wird, dass die entsprechenden Daten der zweiten Kombination in der Schweißausführungsverfahrenstabelle vorhanden sind.

2. Vorrichtung (10) zur Verwaltung eines Schweißvorgangs nach Anspruch 1,
wobei die Schweißausführungsverfahrenstabelle (101c) eine Mehrzahl verschiedener Kombinationen eines Paares der Grundmetallklassen und Schweißmaterialklassen, die zum Schweißen verwendete Schweißmaterialien durch Zuordnen zu den jeweiligen Verwaltungsnummern der Schweißausführungsverfahren klassifizieren, speichert, und
wobei die Vorrichtung (10) zur Verwaltung eines Schweißvorgangs ferner umfasst:
eine Schweißverbindungsspezifikationstabelle (101a), in der die Schweißverbindungsspezifikationen gespeichert sind,
eine Schweißverbindungsspezifikationsregistriereinheit (104), die die Schweißverbindungsspezifikationen mit der Schweißverbindungsspezifikationstabelle (101a) registriert, wenn die Schweißverbindungsspezifikationsüberprüfungseinheit (103) detektiert, dass die entsprechenden Daten der ersten Kombination in der Schweißabschnittsdickenidentifikationstabelle (101b) vorhanden sind und die entsprechenden Daten der zweiten Kombination in der Schweißausführungsverfahrenstabelle (101c) vorhanden sind,
eine Schweißmaterialidentifikationstabelle (101f), die eine Mehrzahl verschiedener Kombinationen eines Paares der Grundmetallklassen der Rohre und der Schweißmaterialklassen durch Zuordnen zu Marken der Schweißgüter speichert, und
eine Schweißmaterialidentifikationseinheit (105), die die Verwaltungsnummern der Schweißausführungsverfahren und ein Paar der die Schweißverbindung betreffenden Materials aus der Schweißverbindungsspezifikationstabelle (101a) gewinnt und die Schweißmaterialklasse aus der Schweißausführungsverfahrenstabelle(101c) auf der Grundlage der Verwaltungsnummern der Schweißausführungsverfahren gewinnt, und die die Schweißmaterialmarken aus der Schweißmaterialidentifikationstabelle (101f) auf der Grundlage einer Kombination aus einem Paar der gewonnenen Grundmetallklassen und der gewonnen Schweißmaterialklasse identifiziert.

3. Vorrichtung (10) zur Verwaltung eines Schweißvorgangs nach Anspruch 1, ferner mit:
einer Schweißverbindungsspezifikationstabelle (101a), die eine Mehrzahl von Schweißverbindungsspezifikationen speichert, und
einer Schweißverbindungsspezifikationsregistriereinheit (109), die die Schweißverbindungsspezifikationen mit der Schweißverbindungsspezifikationstabelle (101a) registriert, wenn die Schweißverbindungsspezifikationsüberprüfungseinheit (103) detektiert, dass die entsprechenden Daten der ersten Kombination in der Schweißabschnittsdickenidentifikationstabelle (101b) vorhanden sind und die entsprechenden Daten der zweiten Kombination in der Schweißausführungsverfahrenstabelle (101c) vorhanden sind.

4. Vorrichtung (10) zur Verwaltung eines Schweißvorgangs nach Anspruch 1,
wobei die Schweißausführungsverfahrenstabelle (101c) eine Mehrzahl von verschiedenen Kombinationen eines Paares der Grundmetallklassen und Schweißverfahrensklassen, die ein zum Schweißen verwendetes Schweißausführungsverfahren klassifizieren, speichert indem sie den jeweiligen Verwaltungsnummern der Schweißausführungsverfahren zugeordnet werden, und
wobei die Vorrichtung (10) zur Verwaltung des Schweißvorgangs ferner umfasst:
eine Schweißqualifikationsidentifizierungstabelle (101g), die eine Mehrzahl von verschiedenen Kombinationen der Schweißverfahrensklassen, der Grundmetallklassen und des Rohrdurchmessers durch Zuordnen zu den jeweiligen für Schweißarbeiten erforderlichen Schweißqualifikationen speichert,
eine Schweißverbindungsspezifikationstabelle (101a), die eine Mehrzahl der Schweißverbindungsspezifikationen speichert, und
eine Schweißqualifikationsidentifizierungseinheit (106), die die jeweiligen Materialien der Rohre, das Verbindungsdesign, den Rohrdurchmesser, die Rohrdicke und die Verwaltungsnummern der Schweißausführungsverfahren bezüglich der gewünschten Schweißverbindung aus der Schweißverbindungsspezifikationstabelle (101a) gewinnt und auch die Schweißverfahrensklasse aus der Schweißausführungsverfahrenstabelle (101c) basierend auf der gewonnenen Verwaltungsnummer der Schweißausführungsverfahren gewinnt und die Schweißqualifikationen bezüglich der Schweißverbindung aus der Schweißqualifikationsidentifizierungstabelle (101g) basierend auf einer Kombination aus einem Paar der Grundmetallklassen, dem Rohrdurchmesser und der gewonnenen Schweißverfahrensklasse identifiziert.

5. Vorrichtung (10) zur Verwaltung eines Schweißvorgangs nach Anspruch 1,
wobei die Schweißverbindungsspezifikationseingabeeinheit (102) mindestens eine Kennung der Schweißverbindung, die Verwaltungsnummer des Schweißausführungsverfahrens, das Verbindungsdesign, ein Paar der Materialien der Rohre, den Rohrdurchmesser und die Rohrdicke als die Schweißverbindungsspezifikationen über einen Registrierbildschirm, der von einer GUI angezeigt wird, eingibt.

6. Vorrichtung (10) zur Verwaltung des Schweißvorgangs nach Anspruch 1,
wobei die Schweißausführungsverfahrenstabelle (101c) eine Mehrzahl verschiedener Kombinationen eines Paares der Grundmetallklassen, Schweißmaterialklassen, die Marken eines zum Schweißen verwendeten Schweißmaterials klassifizieren, und Schweißverfahrensklassen, die Schweißausführungsverfahren durch Zuordnen zu den jeweiligen Verwaltungsnummern der Schweißausführungsverfahren klassifizieren, speichert und
wobei die Vorrichtung (10) zur Verwaltung des Schweißvorgangs ferner umfasst:
eine Schweißverbindungsspezifikationstabelle (101a), die eine Mehrzahl von Schweißverbindungsspezifikationen speichert,
eine Schweißqualifikationsidentifizierungstabelle (101g), die eine Mehrzahl von verschiedenen Kombinationen der Schweißverfahrensklassen, ein Paar der Grundmetallklassen und den Rohrdurchmesser durch Zuordnen zu den jeweiligen für Schweißarbeiten erforderlichen Schweißqualifikationen speichert,
eine Schweißqualifikationsidentifizierungseinheit (106), die ein Paar der Materialien der Rohre, das Verbindungsdesign, den Rohrdurchmesser, die Rohrdicke und ein Schweißausführungsverfahren bezüglich der gewünschten Schweißverbindung aus der Schweißverbindungsspezifikationstabelle (101a) gewinnt und die auch die Schweißverfahrensklasse aus der Schweißausführungsverfahrenstabelle (101c) basierend auf der gewonnenen Verwaltungsnummer der Schweißausführungsverfahren gewinnt, und die die Schweißqualifikationen bezüglich der Schweißverbindung aus der Schweißqualifikationsidentifizierungstabelle (101a) auf der Grundlage einer Kombination aus einem Paar der Grundmetallklassen, der Dicke des Schweißabschnitts, des Rohrdurchmessers und der gewonnenen Schweißverfahrensklasse identifiziert,
eine Schweißmaterialidentifikationstabelle (101f), die eine Mehrzahl verschiedener Kombinationen eines Paares der Grundmetallklassen der Rohre, der Materialien der Rohre und der Schweißmaterialklassen durch Zuordnen zu den jeweiligen Marken des Schweißmaterials speichert,
eine Schweißmaterialidentifikationseinheit (105), die die Verwaltungsnummer der Schweißausführungsverfahren und die jeweiligen Materialien der Rohre bezüglich der Schweißverbindung aus der Schweißverbindungsspezifikationstabelle gewinnt und die Schweißmaterialklasse aus der Schweißausführungsverfahrenstabelle auf der Grundlage der gewonnenen Verwaltungsnummer der Schweißausführungsverfahren gewinnt und die das Schweißmaterial aus der Schweißmaterialidentifikationstabelle auf der Grundlage einer Kombination aus einem Paar der Grundmetallklassen und der gewonnenen Schweißmaterialklasse identifiziert,
eine Schweißbetriebsanweisungseinheit (107), die die Schweißbetriebsanweisungsinformation erzeugt, die eine Kombination der Schweißmaterialien und der identifizierten Schweißqualifikationen den jeweiligen Schweißverbindungen zuordnet, und
eine Tabelle (101h) vorliegender Schweißqualifikation, die eine Mehrzahl verschiedener Kombinationen von Identifikationsinformation eines Schweißers und vorliegender Schweißqualifikationen speichert.

7. Verfahren zur Verwaltung eines Schweißvorgangs mit:
einem Schweißverbindungsspezifikationsgewinnungsschritt (S1701) zum Gewinnen von Schweißverbindungsspezifikationen aus einer Schweißverbindungsspezifikationstabelle (101a), die eine Mehrzahl von verschiedenen Kombinationen von Materialien zweier Rohre und eine Verwaltungsnummer der Schweißausführungsverfahren durch Zuordnen zu einer entsprechenden Schweißverbindung als die Schweißverbindungsspezifikationen zwischen den im Anlagenbau miteinander verschweißten Rohren unter Verwendung einer Kennung der Schweißverbindung als Schlüssel speichert,
einen Schweißmaterialklassengewinnungsschritt (S1704) zum Gewinnen einer Schweißmaterialklasse aus einer Schweißausführungsverfahrenstabelle (101c), die eine Mehrzahl verschiedener Kombinationen eines Paares von Grundmetallklassen , die die jeweiligen Materialien der Rohre klassifizieren, und Schweißmaterialklassen, die zum Schweißen verwendeten Schweißmaterialklassen durch Zuordnen zu entsprechenden Verwaltungsnummern der Schweißausführungsverfahren basierend auf dem Schweißausführungsverfahren, das in den in dem Schweißverbindungsspezifikationsgewinnungsschritt (S1701) gewonnenen Schweißverbindungsspezifikationen enthalten ist, speichert, und
einem Schweißmaterialidentifikationsschritt (S1705) des Identifizierens der die Schweißverbindung betreffenden Marken des Schweißmaterials aus einer Schweißmaterialidentifikationstabelle (101f), die eine Mehrzahl verschiedener Kombinationen eines Paares der Grundmetallklassen und der Schweißmaterialklassen speichert, durch Zuordnen zu Marken der Schweißmaterialien auf der Grundlage einer Kombination aus einem Paar der Grundmetallklassen, die die jeweiligen Materialien der Rohre betreffen, die in den Schweißverbindungsspezifikationen enthalten sind, und der im Schweißmaterialklassengewinnungsschritt (S1704) gewonnenen Schweißmaterialklasse.

8. Verfahren zur Verwaltung eines Schweißvorgangs nach Anspruch 7, ferner mit:
einem zweiten Schweißverbindungsspezifikationsgewinnungsschritt (S1801) zum Gewinnen von Schweißverbindungsspezifikationen aus der Schweißverbindungsspezifikationstabelle (101a), der eine Mehrzahl von verschiedenen Kombinationen eines Verbindungsdesigns, eines Rohrdurchmessers, einer Rohrdicke und der Verwaltungsnummer des Schweißausführungsverfahrens speichert, durch Zuordnen zu der entsprechenden Schweißverbindung als Schweißverbindungsspezifikationen zwischen den Rohren unter Verwendung einer Kennung der Schweißverbindung als Schlüssel,
einem Schweißverfahrensklassengewinnungsschritt (S1804) zum Gewinnen eines Paares von Schweißmaterialklassen aus der Schweißausführungsverfahrenstabelle (101c), die eine Mehrzahl von verschiedenen Kombinationen eines Paares von Grundmetallklassen, die die jeweiligen Materialien der Rohre klassifizieren, und Schweißverfahrensklassen, die die Schweißausführungsverfahren klassifizieren, speichert, durch Zuordnen von Verwaltungsnummern der Schweißausführungsverfahren auf der Grundlage der Verwaltungsnummer der Schweißausführungsverfahrens, die in den Schweißverbindungsspezifikationen enthalten ist, die in dem Schweißverbindungsspezifikationsgewinnungsschritt (S1701) gewonnen wurden, und
einem Schweißqualifikationsidentifizierungsschritt (S1805) zum Identifizieren von Schweißqualifikationen bezüglich der Schweißverbindung aus einer Schweißqualifikationsidentifizierungstabelle (101g), die eine Mehrzahl von verschiedenen Kombinationen eines Paares der Schweißverfahrensklassen, der Grundmetallklassen und des Rohrdurchmessers durch Zuordnen zu den jeweiligen für Schweißarbeiten erforderlichen Schweißqualifikationen auf der Grundlage einer Kombination aus einem Paar der Grundmetallklassen, die die jeweiligen Materialien der Rohre betrifft, und des in den Schweißverbindungsspezifikationen enthaltenen Rohrdurchmessers, der Dicke des in dem Schweißabschnittsdickengewinnungsschritt gewonnenen Schweißabschnitts und der in dem Schweißverfahrensklassengewinnungsschritt (S1804) gewonnenen Schweißverfahrensklasse speichert.

9. Verfahren zur Verwaltung eines Schweißvorgangs nach Anspruch 7, ferner mit:
einem Schweißverbindungsspezifikationseingabeschritt (S1601) zum Eingeben von mindestens Materialien der jeweiligen Rohre, eines Verbindungsdesigns, eines Rohrdurchmessers, einer Rohrdicke und der Verwaltungsnummer des Schweißausführungsverfahrens durch Zuordnen zu der jeweiligen Schweißverbindung als Schweißverbindungsspezifikationen über einen Registrierbildschirm, der von einer Benutzeroberfläche angezeigt wird,
einem ersten Konsistenzüberprüfschritt (S1602) zum Überprüfen der Konsistenz einer ersten Kombination des Verbindungsdesigns, des Rohrdurchmessers und der Rohrdicke durch Bezugnehmen auf eine Schweißabschnittsdickenidentifikationstabelle (101b), die das Verbindungsdesign, den Rohrdurchmesser und die Rohrdicke durch Zuordnen zu einer jeweiligen Dicke eines Schweißabschnittes unter Verwendung einer Kombination aus dem Verbindungsdesign, dem Rohrdurchmesser und der Rohrdicke, die im Schweißverbindungsspezifikationsgewinnungsschritt (S1701) eingegeben wurden, als Schlüssel speichert, um zu detektieren, dass die entsprechenden Daten der ersten Kombination in der Schweißabschnittsdickenidentifikationstabelle vorhanden sind,
einem zweiten Konsistenzüberprüfschritt (S1604) zum Überprüfen der Konsistenz einer zweiten Kombination aus einem Paar der Grundmetallklassen, die die jeweiligen Materialien der Rohre betreffen, und der Verwaltungsnummer der Schweißausführungsverfahren durch Bezugnehmen auf die Schweißausführungsverfahrenstabelle (101c), die das Material klassifizierende Grundmetallklassen und die zum Schweißen verwendeten Schweißausführungsverfahren klassifizierende Schweißverfahrensklassen durch Zuordnen zu den jeweiligen Verwaltungsnummern der Schweißausführungsverfahren unter Verwendung eines Paares der Grundmetallklassen, die die im Schweißverbindungsspezifikationseingabeschritt (S1601) eingegebenen Materialien der Rohre betreffen, als Schlüssel speichert, um zu detektieren, dass die entsprechenden Daten der zweiten Kombination in der Schweißausführungsverfahrenstabelle vorhanden sind, und
einen Warnhinweisausgabeschritt (S1608) zum Ausgaben von Warnhinweisen über die Eingangsschweißverbindungsspezifikationen auf der Grundlage der Überprüfungsergebnisse in den ersten und zweiten Konsistenzüberprüfschritten (S1602; S1604).

10. Verfahren zur Verwaltung eines Schweißvorgangs nach Anspruch 7, ferner mit:
Eingeben von mindestens einer Kennung der Schweißverbindung, der Verwaltungsnummer des Schweißausführungsverfahrens, eines Verbindungsdesigns des Rohres, der Materialien der jeweiligen Rohre, eines Rohrdurchmessers und einer Rohrdicke in eine Schweißverbindungsspezifikationseingabeeinheit (102) als Schweißverbindungsspezifikationen zwischen den im Anlagenbau miteinander verschweißten Rohren,
Speichern des Verbindungsdesigns, des Rohrdurchmessers und der Rohrdicke in einer Schweißabschnittsdickenidentifikationstabelle (101b) durch Zuordnen zu einer entsprechenden Dicke eines Schweißabschnitts,
Speichern der Grundmetallklassen, der Schweißmaterialklassen und der Schweißverfahrensklassen in der Schweißausführungsverfahrenstabelle (101c) durch Zuordnen zu den jeweiligen Verwaltungsnummern der Schweißausführungsverfahren und
Überprüfen der Konsistenz einer ersten Kombination des Verbindungsdesigns, des Rohrdurchmessers und der Rohrdicke durch Bezugnehmen auf die Schweißabschnittsdickenidentifikationstabelle (101b) unter Verwendung einer Kombination des Verbindungsdesigns, des Rohrdurchmessers und der Rohrdicke, die als Schlüssel eingegeben wurden, um zu detektieren, dass die entsprechenden Daten der ersten Kombination in der Schweißabschnittsdickenidentifikationstabelle (101b) vorhanden sind,
Überprüfen der Konsistenz einer zweiten Kombination aus einem Paar der Grundmetallklassen bezüglich der Materialien der jeweiligen Rohre und der Verwaltungsnummer des Schweißausführungsverfahrens durch Bezugnehmen auf die Schweißausführungsverfahrenstabelle (101c) unter Verwendung einer Kombination der Grundmetallklassen, die das Material betreffen, als Schlüssel, um zu detektieren, dass die entsprechenden Daten der zweiten Kombination in der Schweißausführungsverfahrenstabelle (101c) vorhanden sind.

11. Verfahren zur Verwaltung eines Schweißvorgangs nach Anspruch 9, ferner mit:
einem Schweißverbindungsspezifikationsregistrierschritt zum Registrieren der Schweißverbindungsspezifikationen mit der Schweißverbindungsspezifikationstabelle (101a), die eine Mehrzahl der Schweißverbindungsspezifikationen speichert, wenn detektiert wird, dass die entsprechenden Daten der ersten Kombination in der Schweißabschnittsdickenidentifikationstabelle (101b) in dem ersten Konsistenzprüfschritt (S1602) vorhanden sind und die entsprechenden Daten der zweiten Kombination in der Schweißausführungsverfahrenstabelle (101c) in dem zweiten Konsistenzprüfschritt (S1604) vorhanden sind.

## Revendications

1. Dispositif de gestion d'une opération de soudure (10) comprenant :
une unité d'entrée de spécifications de joint soudé (102) qui saisit au moins un identifiant d'un joint soudé, un numéro de gestion de procédé d'exécution de soudure, un modèle de joint, des matériaux de chacun de deux tuyaux, un diamètre des tuyaux et une épaisseur des tuyaux comme spécifications de joint soudé entre les tuyaux mutuellement soudés dans des travaux de construction d'usine ;
une table d'identification d'épaisseur de partie de soudure (101b) qui stocke une pluralité de différentes combinaisons du modèle de joint, du diamètre des tuyaux et de l'épaisseur des tuyaux par association avec une épaisseur respective d'une partie de soudure du joint soudé entre les tuyaux ;
une table de procédé d'exécution de soudure (101c) qui stocke une pluralité de différentes combinaisons d'une paire de classes de métaux de base classant les matériaux des tuyaux par association avec les numéros de gestion de procédé d'exécution de soudure respectifs ; et
une unité d'inspection de spécifications de joint soudé (103) qui se réfère à la table d'identification d'épaisseur de partie de soudure (101b) utilisant le modèle de joint, le diamètre des tuyaux et l'épaisseur de tuyaux qui ont été saisis comme clés pour inspecter la consistance d'une première combinaison du modèle de joint, du diamètre de tuyaux et de l'épaisseur de tuyaux en détectant que les données correspondantes de la première combinaison existent dans la table d'identification d'épaisseur de partie de soudure et se réfèrent également à la table de procédé d'exécution de soudure (101c) utilisant une paire des classes de métaux de base concernant les matériaux respectifs des tuyaux qui ont été saisies comme clé pour inspecter la consistance d'une seconde combinaison des matériaux des tuyaux et le numéro de gestion de procédé d'exécution de soudure en détectant que les données correspondantes de la seconde combinaison existent dans la table de procédé d'exécution de soudure.

2. Dispositif de gestion d'opération de soudure (10) selon la revendication 1,
dans lequel la table de procédé d'exécution de soudure (101c) stocke une pluralité de différentes combinaisons d'une paire des classes de métaux de base et des classes de matériaux de soudure en classant les matériaux de soudure utilisés pour la soudure par association avec les numéros de gestion de procédé d'exécution de soudure respectifs ; et
dans lequel le dispositif de gestion d'opération de soudure (10) comprend en outre :
une table de spécification de joint soudé (101a) qui stocke les spécifications de joint soudé ;
une unité d'enregistrement de spécifications de joint soudé (104) qui enregistre les spécifications du joint soudé avec la table de spécifications de joint soudé (101a) si l'unité d'inspection de spécification de joint soudé (103) détecte que les données correspondantes de la première combinaison existent dans la table d'identification d'épaisseur de partie de soudure (101b) et que les données correspondantes de la seconde combinaison existent dans la table de procédé d'exécution de soudure (101c) ;
une table d'identification de matériau de soudure (101f) qui stocke une pluralité de différentes combinaisons d'une paire des classes de métaux de base des tuyaux et des classes de matériaux de soudure par association avec des marques des matériaux de soudure ; et
une unité d'identification d'un matériau de soudure (105) qui acquiert le numéro de gestion de procédé d'exécution de soudure et une paire de matériaux des tuyaux concernant le joint soudé dans la table de spécification de joint soudé (101a) et acquiert la classe de matériau de soudure dans la table de procédé d'exécution de soudure (101c) sur la base du numéro de gestion de procédé d'exécution de soudure qui a été acquis, et identifie les marques de matériaux de soudure dans la table d'identification de matériau de soudure (101f) sur la base d'une combinaison d'une paire des classes de métaux de base et de la classe de matériaux de soudure qui ont été acquises.

3. Dispositif de gestion d'opération de soudure (10) selon la revendication 1, comprenant en outre :
une table de spécifications de joint soudé (101a) qui stocke une pluralité de spécifications de joint soudé ; et
une unité d'enregistrement de spécifications de joint soudé (109) qui enregistre les spécifications de joint soudé avec la table de spécifications de joint soudé (101a) si l'unité d'inspection de spécification de joint soudé (103) détecte que les données correspondantes de la première combinaison existent dans la table d'identification d'épaisseur de la partie de soudure (101b) et que les données correspondantes de la seconde combinaison existent dans la table de procédé d'exécution de soudure (101c).

4. Dispositif de gestion d'opération de soudure (10) selon la revendication 1,
dans lequel la table de procédé d'exécution de soudure (101c) stocke une pluralité de différentes combinaisons d'une paire des classes de métaux de base et des classes de procédé de soudure classant un procédé d'exécution de soudure utilisé pour la soudure par association avec les numéros de gestion de procédé d'exécution de soudure respectifs ; et
dans lequel le dispositif de gestion d'opération de soudure (10) comprend en outre :
une table d'identification de qualification de soudure (101g) qui stocke une pluralité de différentes combinaisons des classes de procédés de soudure, des classes de métaux de base et du diamètre des tuyaux par association avec des qualifications de soudure respectives requises pour des opérations de soudure ;
une table de spécifications de joint soudé (101a) qui stocke une pluralité des spécifications de joint soudé ; et
une unité d'identification de qualification de soudure (106) qui acquiert les matériaux respectifs des tuyaux, le modèle de joint, le diamètre des tuyaux, l'épaisseur des tuyaux et le numéro de gestion de procédé d'exécution de soudure concernant le joint soudé souhaité dans la table de spécification de joint soudé (101a) et acquiert également la classe de procédé de soudure dans la table de procédé d'exécution de soudure (101c) sur la base du numéro de gestion de procédé d'exécution de soudure acquis et identifie les qualifications de soudure concernant le joint soudé dans la table d'identification de qualification de soudure (101g) sur la base d'une combinaison d'une paire des classes de métaux de base, du diamètre des tuyaux et de la classe de procédé de soudure acquis.

5. Dispositif de gestion d'opérations de soudure (10) selon la revendication 1,
dans lequel l'unité d'entrée de spécification de joint soudé (102) saisit au moins un identifiant du joint soudé, le numéro de gestion du procédé d'exécution de soudure, le modèle de joint, une paire des matériaux des tuyaux, le diamètre des tuyaux et l'épaisseur des tuyaux comme spécifications du joint soudé via un écran d'enregistrement affiché par une interface utilisateur graphique (GUI).

6. Dispositif de gestion d'opération de soudure (10) selon la revendication 1,
dans lequel la table de procédé d'exécution de soudure (101c) stocke une pluralité de différentes combinaisons d'une paire des classes de métaux de base, de classes de matériaux de soudure classant les marques d'un matériau de soudure utilisé pour la soudure et de classes de procédés de soudure classant les procédés d'exécution de soudure par association avec les numéros de gestion de procédé d'exécution de soudure respectifs, et
dans lequel le dispositif de gestion d'opération de soudure (10) comprend en outre :
une table de spécifications de joint soudé (101a) qui stocke une pluralité de spécifications de joint soudé ;
une table d'identification de qualification de soudure (101g) qui stocke une pluralité de différentes combinaisons des classes de procédés de soudure, d'une paire de classes de métaux de base et du diamètre des tuyaux par association avec des qualifications de soudure respectives requises pour des opérations de soudure ;
une identité d'identification de qualification de soudure (106) qui acquiert une paire des matériaux de tuyaux, le modèle de joint, le diamètre des tuyaux, l'épaisseur des tuyaux et un procédé d'exécution de soudure concernant le joint soudé souhaité dans la table de spécification de joint soudé (101a) et acquiert également la classe de procédé de soudure dans la table de procédé d'exécution de soudure (101c) sur la base du numéro de gestion de procédé d'exécution de soudure acquis et identifie les qualifications de soudure concernant le joint soudé dans la table d'identification de qualification de soudure (101a) sur la base d'une combinaison d'une paire des classes de métaux de base, de l'épaisseur de la partie de soudure, du diamètre des tuyaux et de la classe de procédé de soudure acquis ;
une table d'identification de matériau de soudure (101f) qui stocke une pluralité de différentes combinaisons d'une paire des classes de métaux de base des tuyaux, des matériaux des tuyaux et des classes de matériaux de soudure par association avec des marques respectives des matériaux de soudure ;
une unité d'identification de matériau de soudure (105) qui acquiert le numéro de gestion de procédé d'exécution de soudure et les matériaux respectifs des tuyaux concernant le joint soudé dans la table de spécification de joint soudé et acquiert la classe de matériau de soudure dans la table de procédé d'exécution de soudure sur la base du numéro de gestion du procédé d'exécution de soudure ayant été acquis, et identifie le matériau de soudure dans la table d'identification de matériau de soudure sur la base d'une combinaison d'une paire des classes de métaux de base et de la classe de matériau de soudure ayant été acquis ;
une unité d'instruction d'opération de soudure (107) qui crée les informations d'instruction d'opération de soudure qui associe une combinaison des matériaux de soudure et des qualifications de soudure ayant été identifiés avec les joints soudés respectifs ; et
une table de qualification de soudure possédée (101h) qui stocke une pluralité de différentes combinaisons d'informations d'identification d'un soudeur et de qualifications de soudure possédées.

7. Procédé de gestion d'opération de soudure comprenant :
une étape d'acquisition de spécification de joint soudé (S1701) pour acquérir des spécifications de joint soudé provenant d'une table de spécification de joint soudé (101a) qui stocke une pluralité de différentes combinaisons de matériaux de deux tuyaux et un numéro de gestion de procédé d'exécution de soudure par association avec un joint soudé respectif comme spécification de joint soudé entre les tuyaux mutuellement soudés dans des travaux de construction d'usine en utilisant un identifiant du joint soudé comme clé ;
une étape d'acquisition de classe de matériau de soudure (S1704) pour acquérir une classe de matériau de soudure dans une table de procédé d'exécution de soudure (101c) qui stocke une pluralité de différentes combinaisons d'une paire de classes de métaux de base classant des matériaux respectifs des tuyaux et les classes de matériaux de soudure classant des matériaux de soudure utilisés pour la soudure par association avec les numéros de gestion de procédé d'exécution de soudure respectifs sur la base du procédé d'exécution de soudure contenu dans les spécifications de joint soudé acquises dans l'étape d'acquisition de spécifications de joint soudé (S1701) ; et
une étape d'identification de matériau de soudure (S1705) pour identifier les marques d'un matériau de soudure concernant le joint soudé dans une table d'identification de matériau de soudure (101f) qui stocke une pluralité de différentes combinaisons d'une paire des classes de métaux de base et des classes de matériau de soudure par association avec des marques des matériaux de soudure sur la base d'une combinaison d'une paire des classes de métaux de base concernant les matériaux respectifs des tuyaux contenus dans les spécifications de joint soudé et la classe de matériau de soudure acquis dans l'étape d'acquisition de classe de matériau de soudure (S1704).

8. Procédé de gestion d'opération de soudure selon la revendication 7, comprenant en outre :
une seconde étape d'acquisition de spécifications de joint soudé (S1801) pour acquérir des spécifications de joint soudé provenant de la table de spécification de joint soudé (101a) qui stocke une pluralité de différentes combinaisons d'un modèle de joint, d'un diamètre de tuyau, d'une épaisseur de tuyau et le numéro de gestion de procédé d'exécution de soudure par association avec le joint soudé respectif comme spécification de joint soudé entre les tuyaux en utilisant un identifiant du joint soudé comme clé ;
une étape d'acquisition de classe de procédé de soudure (S1804) pour acquérir une paire de classes de matériau de soudure dans la table de procédé d'exécution de soudure (101c) qui stocke une pluralité de différentes combinaisons d'une paire de classes de métaux de base classant les matériaux respectifs des tuyaux et les classes de procédé de soudure classant les procédés d'exécution de soudure par association avec les numéros de gestion de procédé d'exécution de soudure respectifs sur la base des numéros de gestion de procédé d'exécution de soudure contenus dans les spécifications de joint soudé acquises dans l'étape d'acquisition de spécifications de joint soudé (S1701) ; et
une étape d'identification de qualification de soudure (S1805) pour identifier des qualifications de soudure concernant le joint soudé dans une table d'identification de qualification de soudure (101g) qui stocke une pluralité de différentes combinaisons d'une paire des classes de procédé de soudure, des classes de métaux de base et du diamètre des tuyaux par association avec les qualifications de soudure respectives requises pour des opérations de soudure sur la base d'une combinaison d'une paire des classes de métaux de base concernant les matériaux respectifs des tuyaux et le diamètre des tuyaux contenus dans les spécifications de joint soudé, l'épaisseur de la partie de soudure acquise dans l'étape d'acquisition d'épaisseur de partie de soudure et la classe de procédé de soudure acquise dans l'étape d'acquisition de classe de procédé de soudure (S1804).

9. Procédé de gestion d'opération de soudure selon la revendication 7, comprenant en outre :
une étape d'entrée de spécification de joint soudé (S1601) pour saisir au moins des matériaux des tuyaux respectifs, un modèle de joint, un diamètre des tuyaux, une épaisseur des tuyaux et le numéro de gestion de procédé d'exécution de soudure par association avec le joint soudé respectif comme spécifications de joint soudé via un écran d'enregistrement affiché par une interface utilisateur graphique (GUI) ;
une première étape d'inspection de consistance (S1602) pour inspecter la consistance d'une première combinaison du modèle de joint, du diamètre des tuyaux et de l'épaisseur des tuyaux en se référant à une table d'identification d'épaisseur de partie de soudure (101b) qui stocke le modèle de joint, le diamètre des tuyaux et l'épaisseur des tuyaux par association avec une épaisseur respective d'une partie de soudure en utilisant une combinaison du joint soudé, du diamètre des tuyaux et de l'épaisseur des tuyaux saisis dans l'étape d'acquisition de spécifications de joint soudé (S1701) comme clés pour détecter que les données correspondantes de la première combinaison existent dans la table d'identification d'épaisseur de la partie de soudure ;
une seconde étape d'inspection de consistance (S1604) pour inspecter la consistance d'une seconde combinaison d'une paire des classes de métaux de base concernant les matériaux respectifs des tuyaux et le numéro de gestion de procédé d'exécution de soudure en se référant à la table de procédé d'exécution de soudure (101c) qui stocke des classes de métaux de base classant le matériau et les classes de procédé de soudure classant des procédés d'exécution de soudure utilisés pour la soudure par association avec les numéros de gestion de procédé d'exécution de soudure respectifs en utilisant une paire des classes de métaux de base concernant les matériaux des tuyaux saisis dans l'étape d'entrée de spécification de joint soudé (S1601) comme clé pour détecter que les données correspondantes de la seconde combinaison existent dans la table de procédé d'exécution de soudure ; et
une étape de sortie d'informations d'avertissement (S1608) pour délivrer des informations d'avertissement sur les spécifications du joint de soudure d'entrée sur la base de résultats d'inspection dans la première et la seconde étape d'inspection de consistance (S1602 ; S1604).

10. Procédé de gestion d'opération de soudure selon la revendication 7, comprenant en outre :
l'entrée d'au moins un identifiant du joint soudé, du numéro de gestion de procédé d'exécution de soudure, d'un modèle de joint du tuyau, des matériaux des tuyaux respectifs, d'un diamètre des tuyaux et d'une épaisseur des tuyaux dans une unité d'entrée de spécification de joint soudé (102) comme spécification de joint soudé entre les tuyaux mutuellement soudés dans des travaux de construction d'usine ;
le stockage du modèle de joint, du diamètre des tuyaux et de l'épaisseur des tuyaux dans une table d'identification d'épaisseur de partie de soudure (101b) par association avec une épaisseur respective d'une partie de soudure ;
le stockage des classes de métaux de base, des classes de matériau de soudure et des classes de procédé de soudure dans la table de procédé d'exécution de soudure (101c) par association avec les numéros de gestion de procédé d'exécution de soudure respectifs ; et
l'inspection de la consistance d'une première combinaison du modèle de joint, du diamètre des tuyaux et de l'épaisseur des tuyaux en se référant à la table d'identification d'épaisseur de partie de soudure (101b) en utilisant une combinaison du modèle de joint, du diamètre des tuyaux et de l'épaisseur des tuyaux qui ont été saisis comme clés pour détecter que les données correspondantes de la première combinaison existent dans la table d'identification d'épaisseur de partie de soudure (101b),
l'inspection de la consistance d'une seconde combinaison d'une paire des classes de métaux de base concernant les matériaux des tuyaux respectifs et le numéro de gestion de procédé d'exécution de soudure en se référant à la table de procédé d'exécution de soudure (101c) en utilisant une combinaison des classes de métaux de base concernant le matériau comme clé pour détecter que les données correspondantes de la seconde combinaison existent dans la table de procédé d'exécution de soudure (101c).

11. Procédé de gestion d'opération de soudure selon la revendication 9, comprenant en outre :
une étape d'enregistrement de spécifications de joint soudé enregistrant les spécifications de joint soudé avec la table de spécifications de joint soudé (101a) qui stocke une pluralité des spécifications de joint soudé si l'on détecte que les données correspondantes de la première combinaison existent dans la table d'identification d'épaisseur de partie de soudure (101b) dans la première étape d'inspection de consistance (S1602) et que les données correspondantes de la seconde combinaison existent dans la table de procédé d'exécution de soudure (101c) dans la seconde étape d'inspection de consistance (S1604).
